(19) Europäisches Patentamt
European Patent Office
Office européen des brevets

(11) EP 1 894 193 B1

(12) # EUROPÄISCHE PATENTSCHRIFT

(45) Veröffentlichungstag und Bekanntmachung des Hinweises auf die Patenterteilung:
**23.05.2012 Patentblatt 2012/21**

(21) Anmeldenummer: **06761983.3**

(22) Anmeldetag: **08.06.2006**

(51) Int Cl.:
***G11B 7/245*** *(2006.01)*

(86) Internationale Anmeldenummer:
**PCT/EP2006/005463**

(87) Internationale Veröffentlichungsnummer:
**WO 2006/133846 (21.12.2006 Gazette 2006/51)**

(54) **OPTISCHER DATENSPEICHER, DESSEN HERSTELLUNG UND VERWENDUNG**

OPTICAL DATA MEMORY, THE PRODUCTION THEREOF AND ITS USE

MEMOIRE DE DONNEES OPTIQUE, PRODUCTION ET UTILISATION DE CETTE MEMOIRE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.06.2005 DE 102005028145**

(43) Veröffentlichungstag der Anmeldung:
**05.03.2008 Patentblatt 2008/10**

(73) Patentinhaber: **Bayer MaterialScience AG**
**51368 Leverkusen (DE)**

(72) Erfinder:
- **YESILDAG, Mehmet-Cengiz**
**51377 Leverkusen (DE)**
- **POST, Bernd**
**47447 Moers (DE)**
- **HAGEN, Rainer**
**51377 Leverkusen (DE)**
- **KOSTROMINE, Serguei**
**53913 Swisttal (DE)**
- **MEYER, Klaus**
**41539 Dormagen (DE)**
- **OSER, Rafael**
**47800 Krefeld (DE)**

(56) Entgegenhaltungen:
**EP-A1- 0 704 513**
**EP-A2- 0 335 302**
**WO-A-01/61690**
**DE-A1- 10 313 173**
**DE-C1- 19 914 325**
**JP-A- 61 162 386**
**US-B1- 6 620 920**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Schichtenstruktur, die eine Informationsschicht auf Basis eines photoadressierbaren Polymers aufweist, sowie einen optischen Datenspeicher auf Basis dieser Schichtenstruktur, dessen Herstellung und Verwendung für Sicherheitsanwendungen, wie z.B. Smart Cards oder Smart Labels.

Als Smart Cards werden Kunststoffkarten in Scheckkartengröße bezeichnet, die nach heutigem Stand der Technik ein intelligentes Speicherelement in Form eines Elektronik-Chips mit Speicher- und Rechenfunktionalität beinhalten. Typische Werte für einen Elektronik-Chip sind: 8-bit-Mikroprozessor; 5 MHz Taktrate; 40 - 60 Kilobyte Speichervolumen.

Aufgrund der integrierten, eigenständigen Funktionsweise werden Smart Cards für Anwendungen eingesetzt, die ein hohes Sicherheitsniveau erfordern. Das bedeutet Fälschungssicherheit, Datensicherheit und Authentifizierung.

Typische Anwendungen für Smart Cards sind:

- Identifikationskarten ("ID Cards") zum Ausweisen der Identität des Karteninhabers
- Krankenkarten zur Speicherung medizinischer Daten einer Person
- Kredit- und Bankkarten für elektronische Finanztransaktionen

Neue Anwendungen zeichnen sich insbesondere durch die Kombination verschiedener Funktionen in einer sogenannten Multifunktionskarte ("Multi Application Card") aus. Die Multifunktionskarte wird aufgrund der vielfältigen Anwendungen auch als elektronische Geldbörse bezeichnet.

Zukünftige Generationen von Multifunktionskarten werden mehr und mehr Teil des täglichen Lebens werden, d.h. auch eine größere Zahl verschiedener Funktionen in einer Karte integrieren. Daher wird eine je nach Art der Daten angepasste Sicherheitsstufe verlangt werden, wobei das von der Karte gelieferte Sicherheitsniveau höchsten Ansprüchen genügen muss.

Ein aktuelles Beispiel für eine derartige Kombination, die durch ein gestiegenes Sicherheitsbedürfnis vorangetrieben wird, ist die Kombination von Biometrie mit Smart Cards und Ausweisen. Zu letzteren zählen Personalausweise, Reisepässe, Führerscheine, Zugangskarten etc., die wie die Smart Cards aus einem Kunststoff-Folienverbund mit integriertem Speicher-Chip bestehen.

Die Hauptanforderungen an die zukünftigen Generationen der beschriebenen Kartentypen sind:

- Ausreichende Speicherkapazität für digitale und analoge Daten
- Hohe Datensicherheit, die durch technische Lösungen betreffend Leseberechtigung, Schreibberechtigung und Kopierschutz gewährleistet wird
- Skalierbare Datensicherheit, d.h. Unterscheidbarkeit von Daten unterschiedlicher Vertraulichkeit bzw. Sicherheitsstufe
- Erweiterbarkeit (technology upgrades), so dass auch zukünftige biometrische Verfahren und neue multiple Anwendungen integriert werden können
- Niedrige Systemkomplexität betreffend den Schichtaufbau mit seinen Speicher- und Sicherheitselementen und die Integration in einer Karte bzw. einem Dokument

Die Basis dieser optischen Datenspeicher sind sog. photoadressierbare Polymere.

Für Datenspeicherzwecke eignen sich besonders Seitengruppen enthaltende Polymere und Copolymere, die sich durch eine sehr breite Variationsmöglichkeit der Eigenschaften auszeichnen. Ihre besondere Eigenart ist, dass ihre optischen Eigenschaften wie Absorption, Emission, Reflexion, Doppelbrechung, Streuung lichtinduziert reversibel verändert werden können. Beispiele dieser Art sind die Azobenzolgruppen-enthaltenden Seitengruppenpolymere gemäß US-A 5 173 381. Diese zählen zur Klasse der photoadressierbaren Polymere.

Photoadressierbare Polymere kennzeichnet die Fähigkeit, beim Bestrahlen mit polarisiertem Licht eine gerichtete Doppelbrechung auszubilden. Die eingeschriebenen Doppelbrechungsmuster lassen sich im polarisierten Licht sichtbar machen. Es ist weiterhin bekannt, dass man in Schichten aus diesen Polymeren an einer beliebigen Stelle mit polarisiertem Licht eine örtlich begrenzte Doppelbrechung einschreiben kann, deren Vorzugsachse sich beim Drehen der Polarisationsrichtung mitbewegt. Die gerichtete Doppelbrechung bildet sich bei holographischer Belichtung gemäß dem Interferenzmuster aus und führt zur Lichtbeugung. Somit ist auch die holographische Speicherung von analogen

oder digitalen Informationen möglich.

Als holographisches Aufzeichnungsmedium können photoadressierbare Polymere z.B. in optische Karten integriert werden.

JP 61-162386 A beschreibt eine Verbundfolie mit bevorzugt einem Polyvinylchlorid-Polymer als Trägermaterial, wobei die metallische Reflektionsschicht nicht mehr als 300 nm dick ist. Eine Barriereschicht wird nicht erwähnt.

DE 199 14 325 C1 beschreibt ein wiederbeschreibbares optisches Aufzeichnungsmaterial für blaue Laser enthaltend mindestens einen, bei Bestrahlung durch polarisierbare elektromagnetische Strahlung, seine räumliche Anordnung verändernden polymeren und/oder oligomeren Azofarbstoff und ggf. mindestens eine formanisotrope Gruppierung, das dadurch gekennzeichnet ist, dass das Absorptionsmaximum des Farbstoffes bestimmte Spezifikation erfüllt und der Schreibvorgang ebenfalls bestimmten Spezifikaitonen unterliegt. Verbundfolien mit einem Polycarbonat basierten Substrat noch Dickenangaben für die Reflektionsschicht und etwaige zusätzliche Barriereschichten werden nicht erwähnt.

EP 0 335 032 A2 beschreibt eine Vorrichtung zur reversiblen optischen Informationsspeicherung unter Verwendung von Polymeren als Speichermedium, wobei die Vorrichtung einen Film aus einem amorphen Polymeren als Speichermedium enthält und eingerichtet ist, um mittels einer lokalen Variation der Molekülordnung die Information einzuspeichern. Verbundfolien mit Polycarbonat basiertem Substrat, die Anwesenheit von metallischen Reflektionsschichten und deren Schichtdicken sowie die Anwesenheit etwaiger zusätzlicher Barriereschichten in Abhängigkeit dieser Schichten werden nicht beschrieben.

WO 01/61690 A1 betrifft ein Verfahren, nach dem digitale Informationen in einem flächig ausgedehnten Medium mehrfach lichtinduziert gespeichert und wieder gelöscht werden können, wobei die Informationen optisch lesbar sind. Metallische Reflektionsschichten mit einer Schichtdicke von mehr als 300 nm sowie die Anwesenheit einer zusätzlichen polymeren Barriereschicht, wenn die Reflektionsschicht nicht dicker als 300 nm ist, werden nicht erwähnt.

Es besteht der Bedarf nach neuen zukunftssicheren Produkten, die alle genannten Anforderungen zugleich erfüllen können.

Aufgabe der Erfindung ist es daher, optische Datenspeicher, vorzugsweise in Form holographischoptischer Speicherkarten, sogenannter Smart Cards, zur Verfügung zu stellen, weiche diese Forderungen erfüllen.

Die Aufgabe konnte durch den Aufbau, die Herstellung und Verwendung optischer Datenspeicher gelöst werden, welche mindestens eine Schicht oder allgemeiner einen Bereich aufweisen, der aus einem organischen Kunststoff besteht, der keine anorganischen oder metallischen Bestandteile enthält und als Speicherschicht ausgeprägt ist.

Gegenstand der Erfindung sind Verbundfolien bestehend aus folgendem Schichtaufbau:

a) Speicherschicht aus einem photoadressierbaren organischen Polymer mit Struktureinheiten auf Basis der Verbindungen der Formel (I)

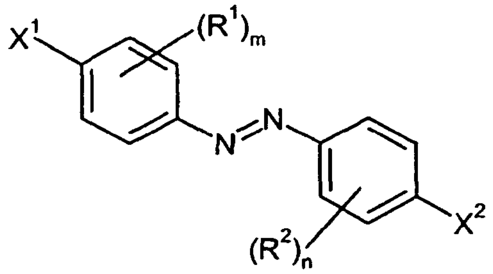

(I),

worin

| | |
|---|---|
| $R^1$ und $R^2$ | unabhängig voneinander für Wasserstoff oder einen nichtionischen Substituenten stehen , |
| m und n | unabhängig voneinander für eine ganze Zahl von 0 bis 4, vorzugsweise 0 bis 2 stehen, |
| $X^1$ und $X^2$ | $X^{1'}$-$R^3$ bzw. $X^{2'}$-$R^4$ bedeuten, |

wobei

| | |
|---|---|
| $X^{1'}$ und $X^{2'}$ | für eine direkte Bindung, -O-, -S-, -(N-$R^5$)-, -C($R^6R^7$)-, -(C=O)-, -(CO-O)-, -(CO-N$R^5$)-, -($SO_2$)-, -($SO_2$-O -($SO_2$-N$R^5$)-, -(C=N$R^8$)-, -(CN$R^8$-N$R^5$)- oder -N=N- stehen, |
| $R^3$, $R^4$, $R^5$ und $R^8$ | unabhängig voneinander für Wasserstoff, $C_1$- bis $C_{20}$-Alkyl, $C_3$- bis $C_{10}$-Cycloalkyl, $C_2$- bis |

$C_{20}$-Alkenyl, $C_6$- bis $C_{10}$-Aryl, $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)- stehen,

| | |
|---|---|
| $R^6$ und $R^7$ | unabhängig voneinander für Wasserstoff, Halogen, $C_1$- bis $C_{20}$-Alkyl, $C_1$-bis $C_{20}$-Alkoxy, $C_3$- bis $C_{10}$-Cycloalkyl, $C_2$- bis $C_{20}$-Alkenyl oder $C_6$- bis $C_{10}$-Aryl stehen oder |
| $X^{1'}$-$R^3$ und $X^{2'}$-$R^4$ | für Wasserstoff, Halogen, Cyan, Nitro, $CF_3$ oder $CCl_3$ stehen, |

b) gegebenenfalls transparente Barriereschicht,
c) wenigstens eine metallische Reflektionsschicht,
d) gegebenenfalls Klebeschicht,
e) Polycarbonat basierte Substratschicht,

wobei für den Fall, dass die metallische Reflektionsschicht nicht dicker als 300 nm ist wenigstens eine Barriereschicht vorhanden ist, welche wenigstens ein polymeres Barrierematerial ausgewählt aus der Gruppe Polyethylen, teilkristallines PET, Polysulfon, hydriertes Polystyrol und dessen Copolymere mit Isopren und Butadien aufweist.

Unter nichtionischen Substituenten sind zu verstehen Halogen, Cyano, Nitro, $C_{1-}$ bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl oder $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$- bis $C_{20}$-Alkyl-(=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$- bis $C_{20}$-Alkyl-NH-(C=O)- oder $C_6$- bis $C_{10}$-Aryl-NH-(C=O)-.

Die Alkyl-, Cycloalkyl-, Alkenyl- und Arylreste können ihrerseits mit bis zu 3 Resten aus der Reihe Halogen, Cyano, Nitro, $C_1$- bis $C_{20}$-Alkyl, $C_1$-bis $C_{20}$-Alkoxy, $C_3$- bis $C_{10}$-Cycloalkyl, $C_2$- bis $C_{20}$-Alkenyl oder $C_6$- bis $C_{10}$-Aryl substituiert sein und die Alkyl- und Alkenylreste können geradkettig oder verzweigt sein.

Unter Halogen ist Fluor, Chlor, Brom und Iod zu verstehen, insbesondere Fluor und Chlor.

Die Verbindungen der Formel (I) sind an die Polymergerüste kovalent gebunden, in der Regel über einen Spacer. Beispielsweise kann $X^1$ (oder $X^2$) aus der Formel (I) dann für einen solchen Spacer stehen, insbesondere für $-S^1-T^1-(Q^1)_i-X^{1'}$,
wobei

| | |
|---|---|
| $X^1$ | die oben angegebene Bedeutung besitzt, |
| $Q^1$ | für -O-, -S-, -(N-$R^5$)-, -C($R^6R^7$)-, -(C=O)-, -(CO-O)-, -(CO-N$R^5$)-, -($SO_2$)-, -($SO_2$-O)-, -($SO_2$-N$R^5$)-, -(C=N$R^8$)-, -(CN$R^8$-N$R^5$)-, -$(CH_2)_p$-, p- oder m-$C_6H_4$- oder einen zweibindigen Rest der folgenden Strukturen |

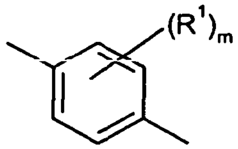
,
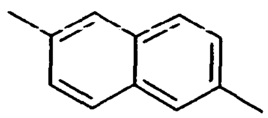
,
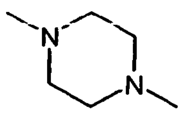

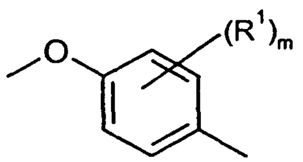

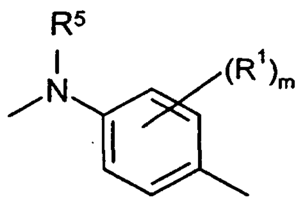

steht,

| | |
|---|---|
| i | für eine ganze Zahl von 0 bis 4 steht, wobei für i >1 die einzelnen $Q^1$ verschiedene Bedeutungen haben können, |
| $T^1$ | für -$(CH_2)_p$- steht, wobei die Kette durch -O-, -N$R^9$-, oder -OSi$R^{10}_2$O- unterbrochen sein kann, |

| | |
|---|---|
| $S^1$ | für eine direkte Bindung, -O-, -S- oder -$NR^9$- steht, |
| p | für eine ganze Zahl von 2 bis 12, vorzugsweise 2 bis 8, insbesondere 2 bis 4 steht, |
| $R^9$ | für Wasserstoff, Methyl, Ethyl oder Propyl steht, |
| $R^{10}$ | für Methyl oder Ethyl steht und |
| $R^5$ bis $R^8$, $R^1$, m | die oben angegebene Bedeutung besitzen. |

Photoadressierbare Polymere (PAP), die als Homopolymere oder Copolymere vorliegen können, bevorzugt als Seitenkettenhomo- und Seitenkettencopolymere, und die Azobenzol-Farbstoffe in der Seitengruppe enthalten, sind bevorzugt.

Die Hauptketten des PAP entstammen den folgenden Grundstrukturen: Polyacrylat, Polymethacrylat, Polyacrylamid, Polymethacrylamid, Polysiloxan, Polyharnstoff, Polyurethan, Polyester, Polystyrol oder Zellulose. Bevorzugt sind Polyacrylat, Polymethacrylat und Polyacrylamid.

Die PAP besitzen vorzugsweise Glasübergangstemperaturen $T_g$ von mindestens 40°C, besonders bevorzugt von mindestens 90°C. Die Glasübergangstemperatur kann beispielsweise nach B. Vollmer, Grundriss der Makromolekularen Chemie, S. 406-410, Springer-Verlag, Heidelberg 1962, bestimmt werden.

Die PAP besitzen normalerweise ein als Gewichtsmittel bestimmtes Molekulargewicht von 3.000 bis 2.000.000 g/mol, vorzugsweise von 5.000 bis 1.500.000 g/mol, bestimmt durch Gelpermeationschromatographie (geeicht mit Polymethylmethacrylat (PMMA)).

Als Seitenkette der photoadressierbaren Polymere sind Azofarbstoff-Fragmente sowie gegebenenfalls zusätzlich mindestens eine formanisotrope Gruppierung (Mesogen) bevorzugt.

Bei den bevorzugt verwendeten PAP sind Azofarbstofffragmente in der Regel über flexible Spacer an die Polymerhauptkette kovalent gebunden. Die Azofarbstofffragmente treten mit der elektromagnetischen Strahlung in Wechselwirkung und verändern dabei ihre räumliche Orientierung.

Die Mesogene sind in der Regel in der gleichen Art angebunden wie die Azofarbstofffragmente. Sie müssen das aktinische Licht nicht notwendigerweise absorbieren, weil sie als passive Molekülgruppe fungieren. Sie sind also nicht photoaktiv im obigen Sinne. Ihre Aufgabe ist es, die lichtinduzierbare Doppelbrechung zu verstärken und nach der Lichteinwirkung zu stabilisieren.

Die Reorientierung der Farbstofffragmente nach der Belichtung mit aktinischem Licht kennt man beispielsweise aus Untersuchungen zur polarisierten Absorptionsspektroskopie: Eine zuvor mit aktinischem Licht belichtete Probe wird zwischen 2 Polarisatoren im UV-/VIS-Spektrometer (z.B. Firma CARY 4G, UV-/VIS Spektrometer) im Spektralbereich der Absorption der Farbstoffe untersucht. Beim Drehen der Probe um die Probennormale und geeigneter Polarisatorenstellung, beispielsweise im gekreuzten Zustand, folgt die Reorientierung der Farbstoffe aus dem Intensitätsverlauf der Extinktion als Funktion des Probenwinkels und ist dadurch eindeutig bestimmbar.

Ein wichtiger Parameter ist die Orientierung der Moleküllängsachse. Diese kann beispielsweise anhand der Molekulargestalt durch molecular modelling (z. B. CERIUS) bestimmt werden.

Besonders bevorzugt sind Verbundfolien, die dadurch gekennzeichnet sind, dass das photoadressierbare organische Polymer in der Speicherschicht a) Struktureinheiten auf der Basis der Verbindungen der Formel (II) aufweist

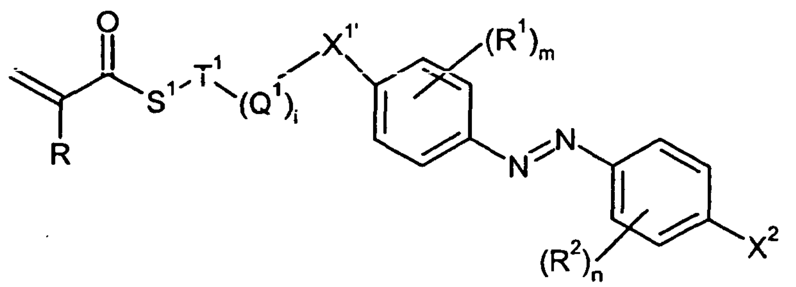

(II),

worin

R für Wasserstoff oder Methyl steht und

die anderen Reste die oben angegebene Bedeutung besitzen.

Besonders geeignet sind photoadressierbare Polymere (PAP) mit Struktureinheiten basierend auf Verbindungen der Formel (II), worin

$X^{1'}$ -(CO-O)-, -(CO-$NR^5$)- und -N=N- bedeutet,

$Q^1$

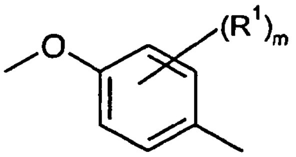
,
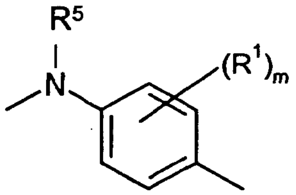
,
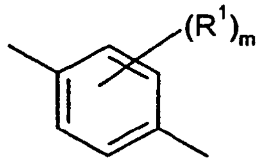
bedeutet und

i = 1 ist

und die anderen Reste die oben angegebene Bedeutung haben.

Als photoadressierbare Polymere werden besonders bevorzugt solche eingesetzt, deren Löslichkeit in organischen Lösungsmitteln typischen Farbstoffen entspricht, die für CD-R und DVD-R Medien verwendet werden. Eine dementsprechende Löslichkeit erlaubt das Auftragen des photoadressierbaren Polymers aus der Lösung auf Kunststoff-Substrate, ohne dass diese chemisch oder physikalisch verändert werden.

Besonders bevorzugt sind daher Verbundfolien, die dadurch gekennzeichnet sind, dass das photoadressierbare organische Polymer in der Speicherschicht a) Struktureinheiten auf Basis der Verbindungen der Formel (II) aufweist, worin

$X^{1'}$ die oben angegebene Bedeutung hat,

$Q^1$

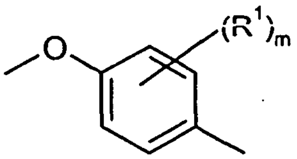
,
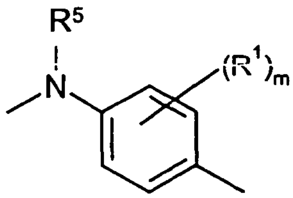

bedeutet,

i = 1 bedeutet und

$S^1$ -$NR^9$- ist

und die Reste R, $T^1$, $X^2$ , $R^1$, $R^2$ und $R^9$ sowie m und n die oben angegebene Bedeutung haben.

S' in Form von -$NR^9$- verleiht den PAP die Löslichkeit in den für die Produktion von CD-R bzw. DVD-R Formaten typischerweise verwendeten Lösungsmitteln, wie z.B. 2,2,3,3-Tetrafluoropropanol (TFP). So lässt sich das PAP als Speicherschicht aus der Lösung direkt auf ein Kunststoffsubstrat durch gängige Beschichtungsmethoden, wie z.B. Rakeln, Gießen, Spincoaten, auftragen. Die Oberfläche des Kunststoffes, insbesondere des Polycarbonates, wird dabei nicht angelöst. Ein weiterer Gegenstand der Erfindung sind optische Datenspeicher, die optisches Schreiben, permanentes Speichern, optisches Auslesen, optisches Wiederbeschreiben und Schutz gegen Löschung oder Überschreiben von Informationen in der Speicherschicht gewährleisten, bestehend aus

I) einer oder mehreren transparenten, doppelbrechungsarmen, nicht streuenden, amorphen Abdeckschichten

II) einer erfindungsgemäßen Verbundfolie, wie sie oben beschrieben wird,

III) gegebenenfalls einem Träger aus Kunststoff in Form mindestens einer Kunststofffolie oder eines Kunststofffolienverbundes oder eines Kunststoffsubstrates.

Vorzugsweise ist der erfindungsgemäße Datenspeicher als holographisch-optische Smart Card ausgeführt. Als optische Smart Card im Sinne der Erfindung bezeichnet man eine Speicherkarte auf Basis von Kunststoff-Folien, die optisches Speichern, Lesen und Wiederbeschreiben von Informationen ermöglicht. Die erfindungsgemäße Smart Card erreicht gegenüber heutigen Smart Cards deutliche Fortschritte bei der Speicherkapazität bei gleichzeitig reduzierter Systemkomplexität sowie erweiterter Funktionalität betreffend Personalisierung, Dokumentensicherheit / Fälschungsschutz.

Die aus dem Markt bekannten holographischen Bilder, genannt Level-1- und Level-2-Sicherheitsmerkmale, können in die Schicht aus einem photoadressierbaren Polymer eingebracht werden. Unter einem Level-1-Sicherheitsmerkmal versteht man ein mit bloßem Auge ohne weitere Hilfsmittel klar erkennbares Merkmal, das der Dokumenten- oder Produktsicherheit dient. Unter einem Level-2-Sicherheitsmerkmal versteht man ein nicht direkt, sondern nur über Hilfsmittel, wie Laser, UV-Lampen oder Mikroskope, sichtbares Merkmal.

Weitere Sicherheitsmerkmale wie z.B. Mikroschrift, optische Wellenleiter mit Auskoppelsignatur und Polarisationsbilder sind ebenfalls über Belichtungsschritte realisierbar.

Optische Verfahren zur Verschlüsselung von Daten, insbesondere die holographische Hardware-Codierung in Form von Phasencodierung, Intensitätscodierung oder Polarisationscodierung sind über die erfindungsgemäße Schicht aus einem photoadressierbaren Polymer zugänglich.

Ein weiterer Gegenstand der Erfindung ist ein Verfahren zur Herstellung einer Verbundfolie, wobei

A) das photoadressierbare Polymer in einem Lösungsmittel aufgelöst wird,

B) die Lösung auf ein Substrat aufgetragen wird bzw. auf die transparente Barriereschicht bzw. auf die Reflexionsschicht falls vorhanden,

C) das Lösungsmittel verdampft wird und die Verbundfolie getrocknet wird.

Die Schichten können durch Drehschleudern (Spin Coating), Rakeln, Gießen, Laminieren, Dipcoating, Hot Stamping, Siebdruck, Sprühen und Hochdruckverformung (High-Pressure Forming) erzeugt und geformt werden.

Vorzugsweise ist der Datenspeicher als Multifunktionskarte, eine "optische Smart Card" in Scheckkartengröße ausgeführt. Smart Cards werden in den internationalen Normen ISO 10373-1, ISO 7810 / 7816 beschrieben. Für kontaktlose Smart Cards wird auf ISO 14443 und ISO 15376 verwiesen.

Alternativ zu diesen Normen können auch personenbezogene Dokumente (Ausweise, Führerscheine etc.) realisiert werden.

Weitere Ausführungsformen sind kontaktlose Sicherheitsschlüssel, insbesondere Zugangskarten (Secure Access Cards), die die Funktion von Sicherheitsschlüsseln erfüllen, sowie optische Speicherkarten (Flash Memory Sticks oder Memory Cards) für PC-Rechner und tragbare Multimedia-Geräte (MP3/4-Player, TV-Player, Digitalkameras, Mobiltelefone, Handheld Computer usw.), sowie frei konfektionierbare Etiketten zum Schutz von Produkten oder Marken, weiterhin Etiketten für logistische Zwecke, z.B. die Verwaltung von Produktionsabläufen oder Lagerhaltung; weiterhin Banknoten, die den Datenspeicher als sichtbares Element beinhalten.

Die erfindungsgemäßen Datenspeicher erfüllen alle Grundanforderungen für die permanente und/oder reversible Speicherung von Daten oder Sicherheitsmerkmalen. Dazu zählen insbesondere die Höhe der lichtinduzierten Doppelbrechung, die hohe optische Reinheit/Qualität als Grundvoraussetzung für eine effiziente holographische Beugung, die Langzeitstabilität der lichtinduzierten Doppelbrechung bei Lagerung und beim Auslesen, hohe laterale Auflösung der polymeren Schicht, die Möglichkeit, digitale oder analoge Daten/Informationen allgemein wiederzubeschreiben durch direktes Überschreiben vorheriger Daten oder durch Löschen vorheriger Daten und darauffolgendes Schreiben, die Möglichkeit, gespeicherte Daten/Informationen allgemein zu fixieren (kodiert oder sichtbar) zum Zwecke der Datenspeicherung, d.h. sie gegen vollständige Löschung zu schützen und Bereiche auch gegen erstmaliges Beschreiben zu schützen, und kein Materialschrumpf, der zu Delaminierung oder Oberflächenmodifikation führen kann, was wiederum Verzerrungen oder Kontrastveränderungen in den Informationsbildem hervorrufen kann.

Die Speicherschicht kann direkt aus einer Lösung auf eine polycarbonatfolie aufgebracht werden.

Die Polycarbonatfolie wird vor Aufbringen der Speicherschicht metallisiert. Diese Variante bietet sich z.B. an, wenn agressive Lösungsmittel für die Lösung des PAP eingesetzt werden. Zusätzlich kann, insbesondere wenn die Metallschicht sehr dünn ist, eine Barriereschicht auf oder unter die Metallschicht appliziert werden. Die Schichten werden mittels bekannter Verfahren erzeugt.

Hauptvorteile des erfindungsgemäßen Datenspeichers sind das hohe und in Stufen variierbare Sicherheitsniveau des Datenspeichers, das Potenzial des Datenspeichers für hohe Speicherkapazität.

Der erfindungsgemäße Datenspeicher zeichnet sich darüber hinaus durch folgende besonders für die Anwendung als Multifunktionskarte relevanten Eigenschaften aus:

- Geringe Komplexität (Transponder-Antenne kann z.B. wegfallen)
- Designfreiheit bezüglich der Form und Größe des Speicherfelds

- Designfreiheit bezüglich der Nutzung der Speicherfläche (Verschiedene Speicherbereiche können vom Nutzer zugewiesen werden.)
- Daten beliebiger Art können holographisch codiert abgelegt werden.
- Skalierbare Sicherheit
- Identifikationselemente können einbelichtet werden.
- Multifunktionalität durch Zugänglichkeit verschiedenster Belichtungstechniken, mit deren Hilfe sowohl Grauwertbilder, als auch digitale Informationen, als auch holographische Codierung möglich sind.

Besonders bevorzugte Verbindungen für PAP sind beispielsweise:

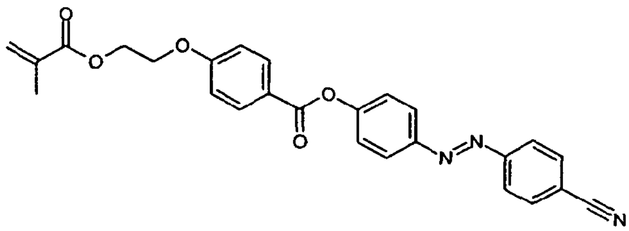

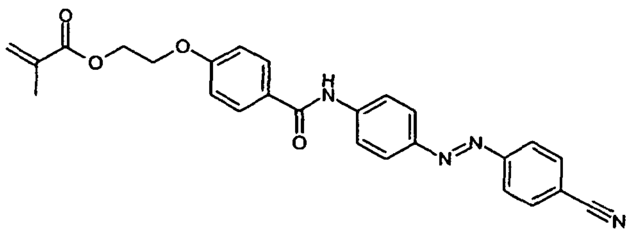

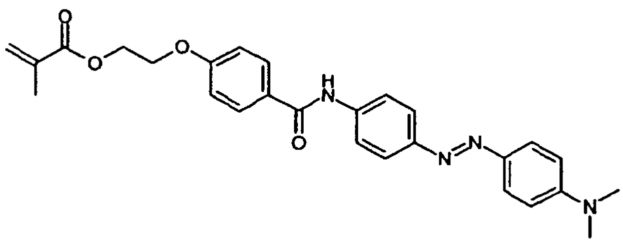

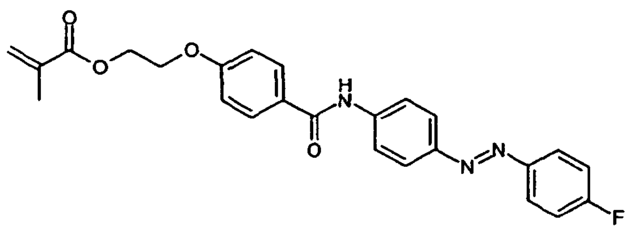

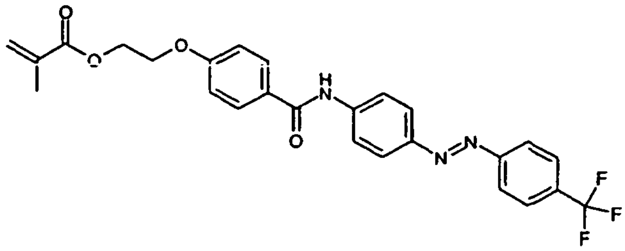

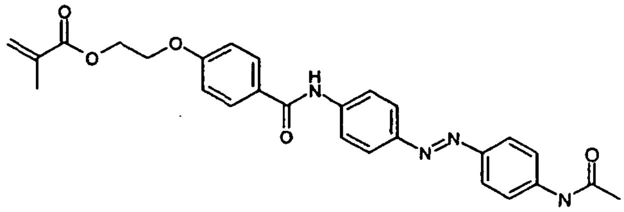

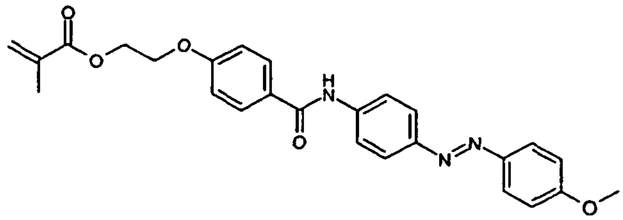

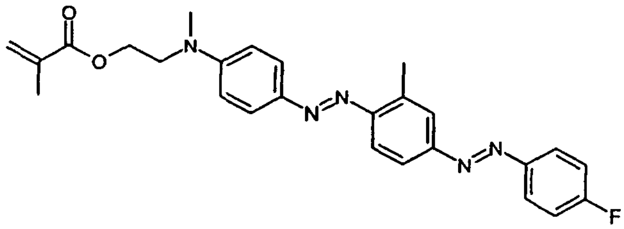

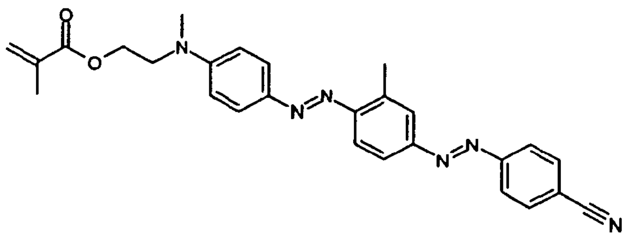

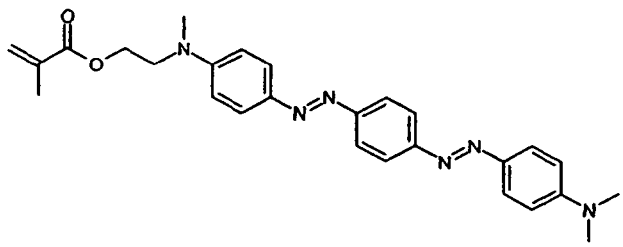

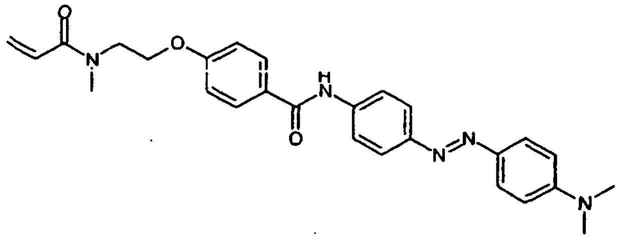

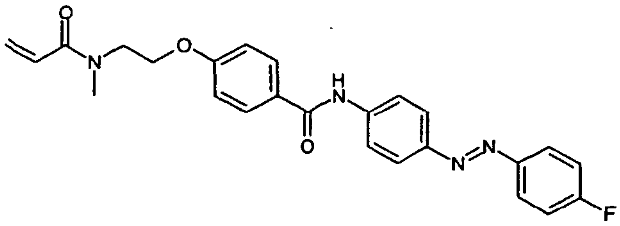

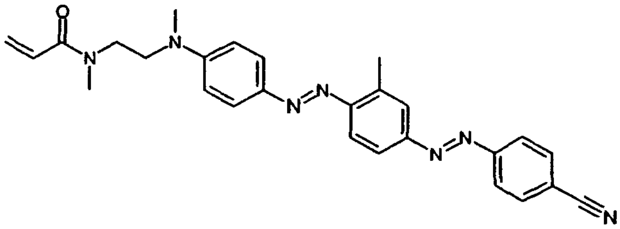

Das polymere oder oligomere organische, amorphe Material (PAP) kann neben den Struktureinheiten, beispielsweise der Formel (I), formanisotrope Gruppierungen (III) tragen. Auch diese sind, in der Regel über einen Spacer, an die Polymergerüste kovalent gebunden.

Formanisotrope Gruppierungen haben beispielsweise die Struktur der Formel (III)

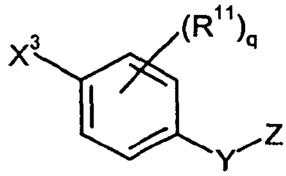

(III),

worin

Z für einen Rest der Formeln

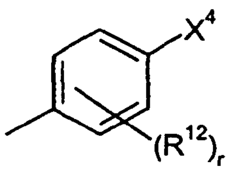

(IIIa)

oder

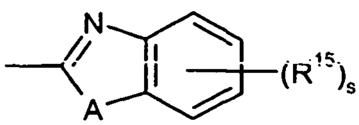

(IIIb)

steht,

worin

A für O, S oder N-$C_1$- bis $C_4$-Alkyl steht,

$X^3$ für -$X^{3'}$-$(Q^2)_j$-$T^2$-$S^2$- steht,

$X^4$ für $X^{4'}$-$R^{13}$ steht,

$X^{3'}$ und $X^{4'}$ unabhängig voneinander für eine direkte Bindung, -O-, -S-, -(N-$R^5$)-, -C($R^6R^7$)-, -(C=O)-, -(CO-O)-, -(CO-$NR^5$)-, -($SO_2$)-, -($SO_2$-O)-, -($SO_2$-$NR^5$)-, -(C=$NR^8$)- oder -($CNR^8$-$NR^5$)- stehen,

$R^5$, $R^8$ und $R^{13}$ unabhängig voneinander für Wasserstoff, $C_1$- bis $C_{20}$-Alkyl, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$-bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)-stehen oder

$X^{4'}$-$R^{13}$ für Wasserstoff, Halogen, Cyan, Nitro, $CF_3$ oder $CCl_3$ stehen kann,

$R^6$ und $R^7$ unabhängig voneinander für Wasserstoff, Halogen, $C_1$- bis $C_{20}$-Alkyl, $C_1$- bis $C_{20}$. Alkoxy, $C_3$- bis $C_{10}$-Cycloalkyl, $C_2$- bis $C_{20}$-Alkenyl oder $C_6$- bis $C_{10}$-Aryl stehen,

Y für eine einfache Bindung, -COO-, OCO-, -CONH-, -NHCO-, -CON($CH_3$)-, -N($CH_3$)CO-, -O-, -NH- oder -N($CH_3$)- steht,

$R^{11}$, $R^{12}$, $R^{15}$ unabhängig voneinander für Wasserstoff, Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl oder $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$- bis $C_{20}$-Alkyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$- bis $C_{20}$-Alkyl-NH-(C=O)- oder $C_6$- bis $C_{10}$-Aryl-NH-(C=O)- stehen,

q, r und s unabhängig voneinander für eine ganze Zahl von 0 bis 4, vorzugsweise 0 bis 2 stehen,

$Q^2$ für -O-, -S-, -(N-$R^5$)-, -C($R^6R^7$)-, -(C=O)-, -(CO-O)-, -(CO-$NR^5$)-, -($SO_2$)-, -($SO_2$-O)-, -($SO_2$-$NR^5$)-, -(C=$NR^8$)-, -($CNR^8$-$NR^5$)-, -$(CH_2)_p$-, p- oder m-$C_6H_4$- oder einen zweibindigen Rest der Formeln

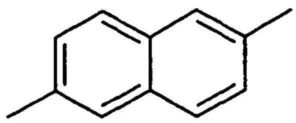

oder

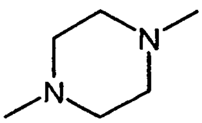

steht,

j für eine ganze Zahl von 0 bis 4 steht, wobei für j > 1 die einzelnen $Q^2$ verschiedene Bedeutungen haben können,

$T^2$ für -$(CH_2)_p$- steht, wobei die Kette durch -O-, -$NR^9$-, oder -$OSiR^{10}_2O$- unterbrochen sein kann,

$S^2$ für eine direkte Bindung, -O-, -S- oder -$NR^9$- steht,

p für eine ganze Zahl von 2 bis 12, vorzugsweise 2 bis 8, insbesondere 2 bis 4 steht,

$R^9$ für Wasserstoff, Methyl, Ethyl oder Propyl steht und

$R^{10}$ für Methyl oder Ethyl steht.

Die formanisotropen Gruppierungen (III) sind vorzugsweise über sogenannte Spacer an z.B. Acrylate oder Methacrylate gebunden und weisen dann die Formel (IV) auf

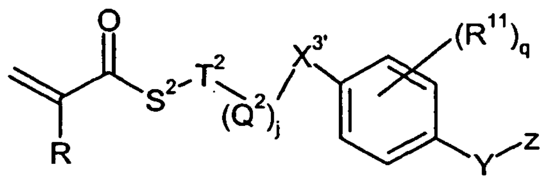

(IV),

worin

R für Wasserstoff oder Methyl steht und

die anderen Reste die oben angegebene Bedeutung besitzen.

Die Alkyl-, Cycloalkyl-, Alkenyl- und Arylreste können ihrerseits durch bis zu 3 Reste aus der Reihe Halogen, Cyano, Nitro, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl -substituiert sein und die Alkyl- und Alkenylreste können geradkettig oder verzweigt sein.

Unter Halogen ist Fluor, Chlor, Brom und Iod zu verstehen, insbesondere Fluor und Chlor.

Besonders bevorzugte Verbindungen der Formel (IV) mit formanisotropen Gruppen sind beispielsweise:

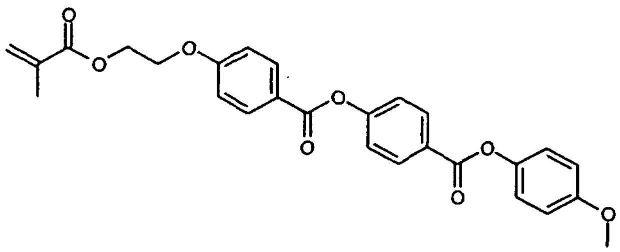

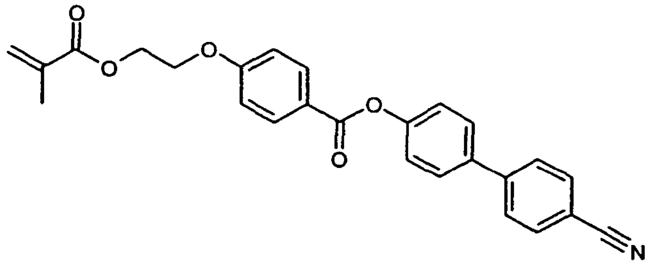

Neben diesen funktionalen Bausteinen können die PAP auch Bausteine enthalten, die hauptsächlich zur Erniedrigung des prozentualen Gehalts an funktionalen Bausteinen, insbesondere an Farbstoffbausteinen, dienen. Neben dieser Aufgabe können sie auch für andere Eigenschaften der PAP verantwortlich sein, z. B. die Glasübergangstemperatur, Flüssigkristallinität, Filmbildungseigenschaft, usw.

Für PAP auf Basis von Polyacryl- oder -methacryl-Kunststoffen sind Acryl- oder Methacrylsäureester bzw. -amide der Formel (V) bevorzugt

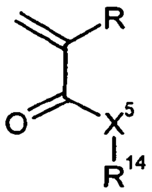

(V)

worin

R für Wasserstoff oder Methyl steht,

$X^5$ für -O- oder -(N-$R^{15}$)- steht

$R^{14}$ und $R^{15}$ unabhängig voneinander für gegebenenfalls verzweigtes $C_1$- bis $C_{20}$-Alkyl oder für einen wenigstens eine weitere Acryleinheit enthaltenden Rest stehen oder zusammen ein Brückenglied $-(CH_2)_f-$, $-CH_2-CH_2-O-$ $CH_2-CH_2-$ oder $-CH_2-CH_2-N(R)-$ $CH_2-CH_2-$ bilden, wobei

f für 2 bis 6 steht.

Verbindungen der Formel (Va)

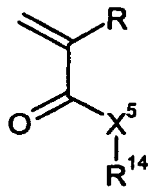

(Va),

worin

R für Wasserstoff oder Methyl steht,

$X^5$ für -(N-$R^{15}$)- steht und

$R^{14}$ und $R^{15}$ die oben definierte Bedeutung haben,

sind ganz besonders bevorzugt.

Die Einführung dieser Monomereinheiten verleiht den PAP die Löslichkeit in den typischen Lösungsmitteln für die CD-R bzw. DVD-R Produktion, wie z.B. 2,2,3,3-Tetrafluoropropanol (TFP), über die sich die PAP direkt auf das Polycarbonatsubstrat auftragen lassen. Die Oberfläche des Polycarbonates wird dabei nicht angelöst.

Neben den funktionalen Bausteinen der Formeln I und II, welche für die Speicherung der optischen Information über das einwirkende photophysikalisch wirksame Licht verantwortlich sind, können die Polymeren auch weitere Bausteine enthalten, welche Farbstoffe anderer Klassen tragen, die hauptsächlich zur Absorption des UV-, VIS- und IR-Außenlichtes beitragen, dessen Wellenlängenspektrum nicht mit der Wellenlänge des photophysikalisch wirksamen Lichts, z.B. eines so genannten Schreiblasers, überlappt, und damit die Struktureinheiten I, II und III auf eine Weise vor Außenlicht schützen, dass die gespeicherten Informationen in der Speicherschicht lichtstabiler abgelegt sind. Es können aber auch andere Comonomere enthalten sein.

Besonders bevorzugte PAP sind beispielsweise:

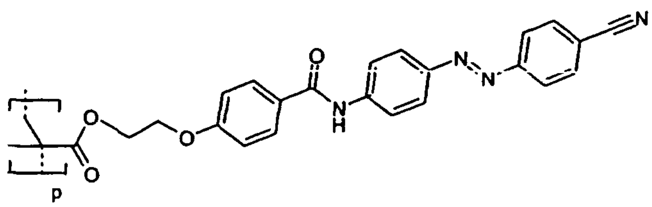

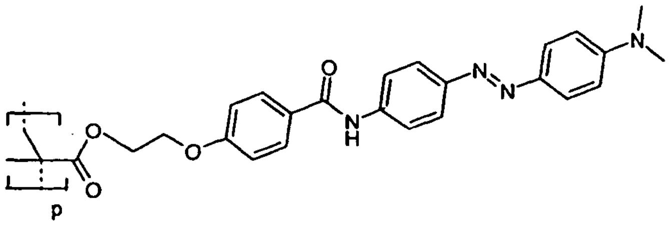

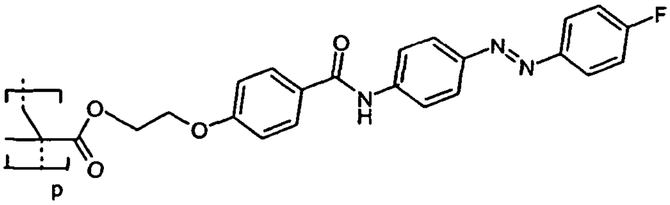

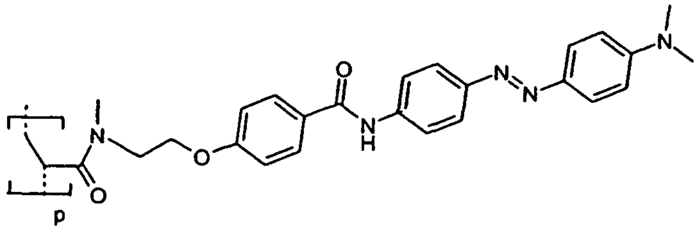

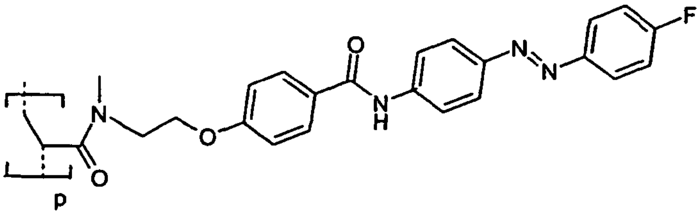

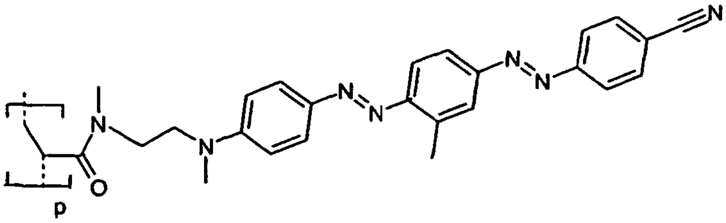

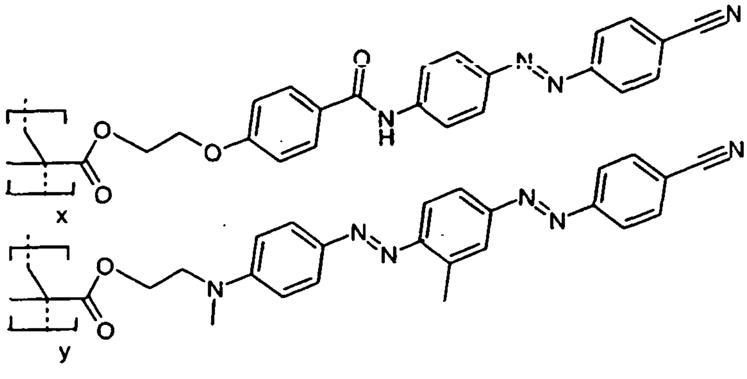

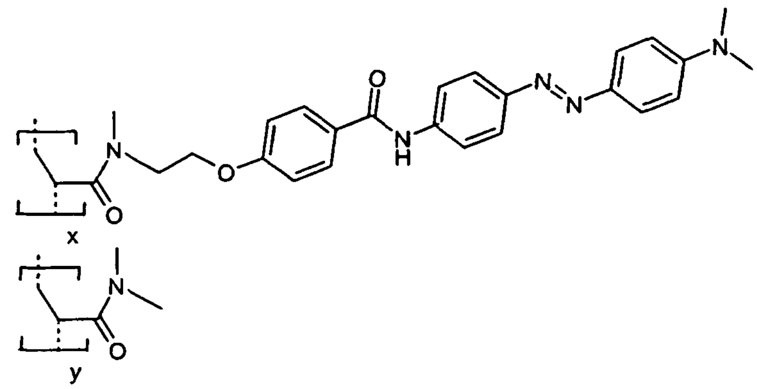

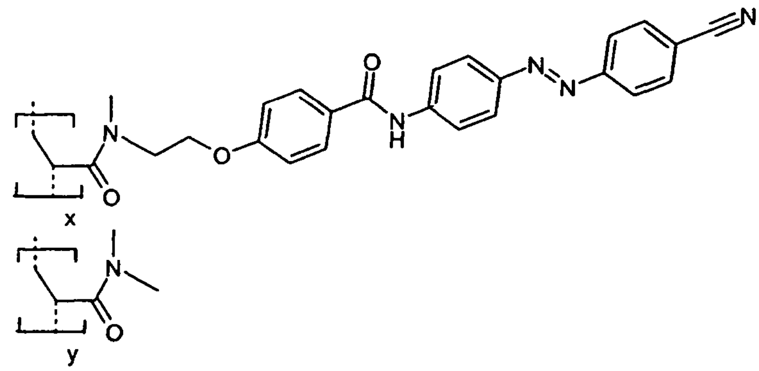

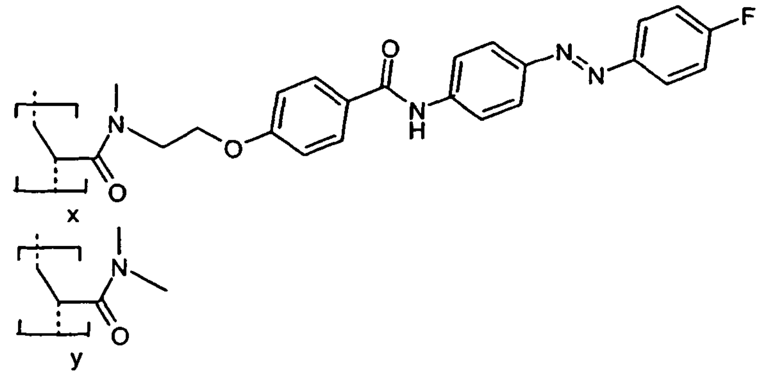

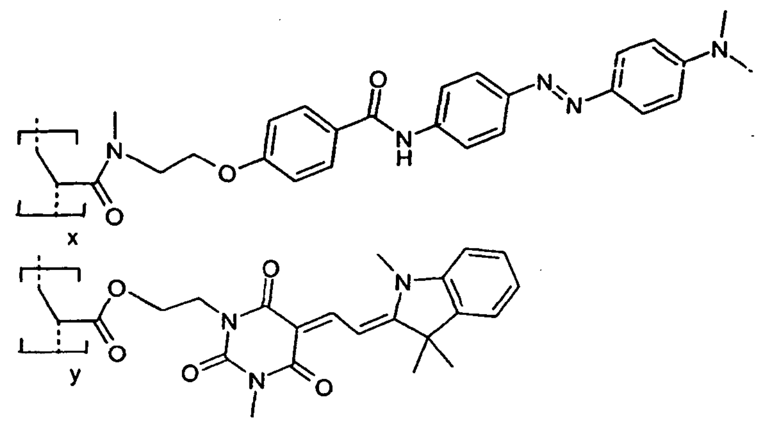

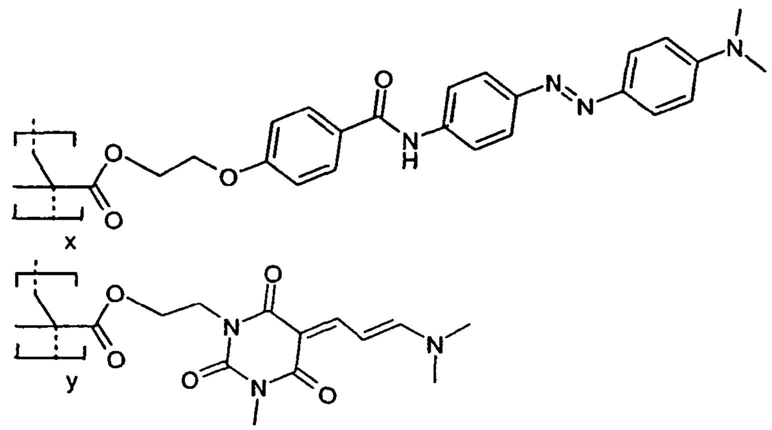

mit x, y und p von 5 bis 50 000, vorzugsweise 10 - 20 000 und x von 1 mol-% bis 99 mol-% auf Basis von x und y und y von (100 mol-% - x). Bevorzugt beträgt die Konzentration von II je nach Absorptionskoeffizienten von II zwischen 0,1 und 100 % bezogen auf das jeweilige Gemisch. Das Verhältnis zwischen II und IV beträgt zwischen 100:0 und 1:99, bevorzugt zwischen 100:0 und 20:80, ganz besonders bevorzugt zwischen 100:0 und 50:50.

Die photoadressierbaren Polymere (PAP) zeigen sehr hohe lichtinduzierte Brechungsindexänderungen, deren Ausmaß gezielt über die eingestrahlte Lichtenergiedosis eingestellt werden können. Doppelbrechungswerte in der Schicht von vorzugsweise größer als 0,07 im VIS-Spektralbereich, besonders bevorzugt von größer als 0,1, ganz besonders bevorzugt von größer als 0,15 sind erreichbar. Damit ist es möglich, in einer PAP-Schicht durch Belichtung Bereiche zu generieren, die einen abweichenden Brechungsindex besitzen, so dass Informationen allgemeinster Art abgelegt, d.h. permanent gespeichert werden können.

Die PAP können aus der Lösung auf einen Träger (Substratschicht, insbesondere auf eine Trägerfolie durch bekannte Techniken, wie z.B. Spincoaten, Sprühen, Rakeln, Dipcoating etc. aufgetragen werden. Die Schichtdicken der resultierenden Filme liegen typischerweise zwischen 10 nm und 50 $\mu$m, bevorzugt zwischen 30 $\mu$m und 5 $\mu$m, besonders bevorzugt zwischen 200 nm und 2 $\mu$m.

Abhängig von dem oder den gewünschten Verfahren zum Lesen / Auslesen der im PAP-Film gespeicherten Information ist die Trägerfolie (Substratschicht) mit einer Reflexionsschicht versehen, die eine Reflektivität von wenigstens 20 % aufweist. Die Reflexionsschicht besteht in einer Ausführungsform aus einer Metallschicht. Metalle oder metallische Legierungen, bevorzugt Aluminium, Titan, Gold und Silber, besonders bevorzugt Aluminium und Silber, können verwendet werden.

Die Herstellung findet nach bekannten Methoden, wie Galvanisierung, Aufdampfen und Sputtering statt.

Es können auch handelsübliche metallisierte thermoplastische Folien verwendet werden.

In einer zweiten Ausführungsform ist die Reflexionsschicht als Multilayer-Struktur ausgeprägt, bei welcher der gewünschte Reflexionsgrad durch gezielte Mehrfachreflexionen in ihrer Schichtenstruktur erzielt wird.

Die Reflexionsschicht zeichnet sich durch eine optische Reflektivität von mindestens 20 % aus. Die mittlere Reflektivität im sichtbaren (VIS) und nahen infraroten (NIR) Spektralbereich liegt bei bevorzugt mindestens 50 %, bevorzugt bei mindestens 80%, besonders bevorzugt bei mindestens 90%.

Besonders dicke metallische Reflektionsschichten (>300 nm) dienen auch zum Schutz des Trägermaterials vor den Lösemitteln, die beim Auftragen der photoadressierbaren Polymere verwendet werden. Das ist wichtig für den Fall, dass das Lösemittel das Material der Trägerfolie anlösen kann.

Um solches Anlösen der Trägerfolie oder gegebenenfalls ein Ablösen der Reflexionsschicht zu verhindern, können bei einigen Kombinationen von PAP-Lösemittel und Trägermaterial auch eine oder mehrere zusätzliche Barriereschichten als Schutz verwendet werden. Solche Schichten können aus der Lösung, durch Aufdampfen oder durch verschiedene CVD (chemical vapor deposition) Verfahren, wie z.B. Plasma-Polymerisation, hergestellt werden und sind typischerweise zwischen 5 und 500 nm dick. Barrierematerialien sind Polyethylen, teilkristallines PET, Polysulfon, hydriertes Polystyrol und dessen Copolymere mit Isopren und Butadien.

Eine weitere Variante, eine Schutzschicht auf die Trägerfolie aufzubringen, ist die Coextrusion, wobei z.B. eine Polysulfonschicht auf die Polycarbonatfolie gebracht werden kann .

Als Abdeckschicht(-en) für den optischen Datenspeicher werden bevorzugt so genannte Schutzlacke verwendet. Der Schutziack kann für folgende Zwecke eingesetzt werden: UV-Schutz und Bewitterungsschutz, Kratzschutz, mechanischer Schutz, mechanische Stabilität und Temperaturstabilität. Für die Zielanwendung Smart Card und ID Card (Pass) sind insbesondere UV-Schutz und Kratzschutz erforderlich.

Die Abdeckschicht ist bevorzugt ein durch Strahlung aushärtender Lack, vorzugsweise ein UVhärtender Lack. UV-härtende Beschichtungen sind bekannt und in der Literatur beschrieben, z.B. P. K. T. Oldring (Ed.), Chemistry &

Technology of UV & EB Formulations For Coatings, Inks & Paints, VoL 2, 1991, SITA Technology, London, pp. 31 - 235. Diese sind als Reinmaterial oder als Mischung kommerziell erhältlich. Die Materialbasis bilden Epoxyd-Acrylate, Urethan-Acrylate, Polyester-Acrylate, acrylisierte Polyacrylate, acrylisierte Öle, Silizium-Acrylate, amin-modifizierte und nicht-amin-modifizierte Polyether-Acrylate. Zusätzlich zu Acrylaten oder anstelle von Acrylaten können Methacrylate verwendet werden. Weiterhin können polymere Produkte eingesetzt werden, die Vinyl, Vinylether, Propenyl, Allyl, Maleinyl, Fumaryl, Maleimide, Dicyclopentadienyl und/oder Acrylamid-Gruppen als polymerisierbare Komponenten enthalten. Acrylate und Methacrylate sind bevorzugt. Kommerziell erhältliche Photoinitiatoren können mit 0,1 bis ca. 10 Gew.% enthalten sein, z.B. aromatische Ketone oder Benzoin-Derivate.

In einer weiteren Ausführung besteht die Abdeckschicht aus einer Kunststofffolie, die mit dem genannten Lack beschichtet ist. Die Kunststofffolie wird durch Gießen, Rakeln, Drehschleudern (Spin Coating), Siebdruck, Sprühen oder Laminieren aufgebracht. Der Lack kann vor oder nach diesem Prozessschritt auf die Kunststofffolie aufgebracht werden.

Die Abdeckschicht muss folgende Eigenschaften erfüllen: Hohe Transparenz im Wellenlängenbereich 750 bis 300 nm, vorzugsweise von 650 bis 300 nm, doppelbrechungsarm, nicht streuend, amorph, kratzfest, bevorzugt gemessen nach dem Pencil-Hardness-Test oder anderen Abrasionstests, die von Kartenherstellern eingesetzt werden, eine Viskosität vorzugsweise von ca. 100 mPas bis ca. 100.000 mPas.

Besonders bevorzugt sind Harze/Lacke, die während der Belichtung nur wenig schrumpfen, eine schwache Doppelbindungsfunktionalität und ein relativ hohes Molekulargewicht aufweisen. Besonders bevorzugte Materialeigenschaften sind daher eine Doppelbindungsdichte unterhalb von 3 mol/kg, eine Funktionalität kleiner als 3, ganz besonders bevorzugt kleiner als 2,5 und ein Molekulargewicht $M_n$ größer als 1.000 und ganz besonders bevorzugt größer als 3.000 g/mol.

Die Auftragung der Flüssigkeit erfolgt über Gießen, Rakeln oder Drehschleudern (Spin Coating).

Das anschließende Aushärten erfolgt durch großflächige Belichtung, bevorzugt durch Belichtung mit UV-Licht.

Solche Lackschichten können auch UV-Absorber für UV-Spektralbereiche und Lichtabsorber für verschiedene VIS-Spektralbereiche (mit Ausnahme der verwendeten Schreib- und Lesewellenlänge) enthalten, wie z.B. polymerisierbare Merocyanin-Farbstoffe (WO 2004/086390 A1, DE 103 13 173 A1) oder Nanopartikel.

Die Substratschicht hat die Aufgabe eines Trägers für den Datenspeicher, der ihm mechanische Stabilität verleiht, oder für eine weitere Systemintegration notwendig ist, z.B. als Klebefolie. Bevorzugt ist die Substratschicht als Folie ausgebildet.

Die optischen Anforderungen an Barriereschichten, Abdeckschichten und Trägermaterialien resultieren aus den Verfahren zum Einschreiben von Informationen in die Speicherschicht, zum Auslesen und zum Fixieren; die Schichten müssen transparent für das Laserlicht sein, das zum Lesen und Schreiben benutzt wird, und ohne Einfluss auf die Polarisation.

Mit (Ein-)Schreiben bezeichnet man einen Belichtungsprozess, bei dem die Wellenlänge oder der Wellenlängenbereich des Lichts mit dem Absorptionsbereich des erfindungsgemäßen PAP-Speichermaterials überlappt, so dass das Licht photophysikalisch wirksam wird und die gewünschten Photoorientierungsprozesse auf molekularer Ebene stattfinden.

Der bevorzugte Wellenlängenbereich des photophysikalisch wirksamen Lichts liegt zwischen 380 nm und 568 nm, besonders bevorzugt zwischen 395 und 532 nm.

Bei photographischen Belichtungen wird in der Regel in senkrechter Inzidenz mit Laserlicht oder Lampenlicht eingestrahlt. Bei Interferenzbelichtungen, wie sie für die Holographie verwendet werden, können Strahlen auch schräg einfallen. Holographische Verfahren erlauben das Belichten von einer oder zugleich von beiden Seiten des Datenspeichers.

Abhängig von den für den Schreibvorgang gewünschten Belichtungsgeometrien müssen die Grenzschichten der Speicherschicht transparent, verzerrungsfrei, achromatisch und doppelbrechungsfrei sein.

Beim Einschreiben von oben gelten diese Anforderungen für die Abdeckschicht(-en). Bei dieser Belichtungsgeometrie hat der Datenspeicher i.d.R. eine Reflexionsschicht.

Beim Einschreiben von unten gelten diese Anforderungen zusätzlich für die Trägermaterialien und für die gegebenenfalls vorhandenen Barriereschichten.

Mit (Aus-)Lesen bezeichnet man den Prozess, der die gespeicherten Daten wieder bringt. Das Auslesen findet mit dem Auge oder einem Kamerasystem als Detektor statt, während Licht (Tageslicht, Kunstlicht, z.B. von Halbleiter-Laserdioden, oder Laserlicht) auf den Ort der gespeicherten Information eingestrahlt wird, dessen Wellenlänge oder Wellenlängenbereich bevorzugt nicht mit dem Absorptionsbereich des erfindungsgemäßen PAP-Speichermaterials überlappt, so dass das Licht photophysikalisch nicht wirksam wird.

Der Wellenlängenbereich des Leselichts liegt im Sichtbaren (VIS) oder nahen Infraroten (NIR), bevorzugt im Wellenlängenbereich zwischen 633 nm und 1350 nm, besonders bevorzugt zwischen 650 nm und 1200 nm.

Die Intensität des Leselichts ist bei breitbandiger Einstrahlung typischerweise kleiner als 10 mW/($cm^2$ nm), bei schmalbandiger Einstrahlung typischerweise kleiner als 10 mW/$cm^2$, bevorzugt kleiner als 1 mW/$cm^2$.

Eine Einstrahlung im Absorptionsbereich der Speicherschicht führt unter der Voraussetzung nicht zu einer

Veränderung der gespeicherten Informationen, wenn die Belichtungsdauer kurz genug und/oder die Lichtintensität niedrig genug gewählt wird.

Wird in Reflexion ausgelesen, liegen Lichtquelle und Detektor/Auge auf derselben Seite des Datenspeichers. Die für diese Belichtungsgeometrie bevorzugte Ausführungsform des Datenspeichers weist eine Reflexionsschicht auf. Die genannten optischen Anforderungen betreffen wie bei dem Schreibvorgang insbesondere die Abdeckschicht(en).

Das Auslesen in Transmission bedeutet, dass Belichtung und Beobachtung/Detektion von zwei verschiedenen Seiten stattfinden. Die genannten optischen Anforderungen betreffen in diesem Fall zusätzlich das Trägermaterial, und sofern vorhanden, auch die Barriereschicht.

Eine für diese Belichtungsgeometrie besonders bevorzugte Ausführungsform des Datenspeichers weist eine Aussparung in dem Trägermaterial auf, ein sog. optisches Fenster, in das die erfindungsgemäße Verbundfolie bündig eingelegt ist.

Gegenstand der Erfindung ist auch eine Methode zum Fixieren geschriebener Informationen. Mit Fixieren meint man den Schutz gegen Löschen mittels Licht oder thermischer Energie.

Geschriebene Informationen können fixiert werden, indem man den beschriebenen PAP-Film an der Stelle der gespeicherten Information intensivem UV/VIS-Licht aussetzt, wie es z.B. direkte Sonneneinstrahlung oder ein vergleichbarer Belichtungsapparat (z.B. Atlas Suntester, 750 $W/m^2$) liefert. Für die Fixierung geschriebener Informationen sind besonders PAP mit Struktureinheiten auf Basis der Verbindungen der Formel (II), wobei $S^1$ -$NR^9$- ist, geeignet.

Die typische Energiedosis liegt bei 500 bis 5000 $kJ/m^2$.

Eine Stabilisierung gegen versehentliches Löschen erreicht man durch Tempern der beschriebenen erfindungsgemäßen Verbundfolie bei Temperaturen im Bereich der Glasübergangstemperatur $T_g$ oder bis zu 70°C darüber, bevorzugt im Temperaturbereich von Tg bis $T_g$+30°C.

Die Erfindung soll anhand der nachfolgenden Beispiele näher erläutert werden.

__Beispiele__

__**Beispiel 1** (Monomersynthese):__

1.1

47,6 g 4-Amino-acetanilid wurden bei 80°C in 200 ml Wasser vorgelegt. In diese Mischung gab man 20 ml 37% Salzsäure und rührte bis zur vollständigen Lösung. Diese Lösung wurde auf 0°C abgekühlt. Die restlichen 230 ml 37 % Salzsäure wurden dann langsam zugegeben. Unter Einhaltung einer Temperatur von 0 - 5°C tropfte man 80,5 g Natriumnitrit-Lösung (30 % in Wasser) innerhalb von 45 min zu. Es wurde 2 h lang bei 0 - 5°C nachgerührt.

38,4 g N,N-Dimethylanilin wurden in eine Mischung aus 500 ml Methanol und 250 ml Wasser vorgelegt und auf 10 - 15°C abgekühlt

Dieser Lösung wurde Diasoniumsalzlösung langsam zugetropft. Mit 10 %-iger NaOH-Lösung wurde ein pH-Wert von 4 - 6 gehalten. Das Reaktionsgemisch wurde 30 min nachgerührt. Der Niederschlag wurde abfiltriert, mit Wasser auf dem Filter gewaschen und in Vakuum getrocknet. Reinigung erfolgte durch zweimaliges Aufkochen in Toluol.

Die Ausbeute des Produktes

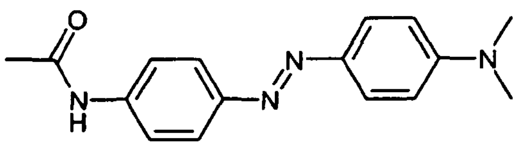

(B1.1)

betrug 65 g.

1.2

50 g KOH wurden in 450 g Ethanol gelöst. In diese Lösung gab man 25 g der Substanz B1.1 und rührte 3 h unter Rückfluss. Diese Lösung wurde bis Raumtemperatur abgekühlt und in 1000 ml Wasser gegeben. Der pH-Wert der Suspension wurde langsam mit 10 %-iger Salzsäure auf 10 gestellt. Der Niederschlag wurde abfiltriert, auf dem Filter mit Wasser gewaschen und getrocknet. Reinigung erfolgte durch zweimaliges kräftiges Ausrühren in Toluol bei Raumtemperatur. Die Ausbeute des Produktes

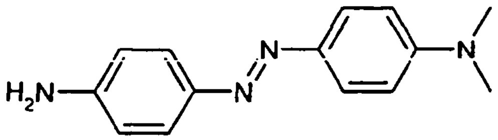

(B1.2)

betrug 17 g.

| | |
|---|---|
| Elementaranalyse: | $C_{14}H_{16}N_4$ (240,31) |
| Ber.: | C69,97; H6,71; N23,31. |
| Gef.: | C70,00; H6,70 N23,10. |

1.3

Zu einer Lösung von 120 g 4-(2-Methacryloyloxy-ethoxy)-benzoesäurechlorid in 650 ml Dioxan wurden 107 g der Substanz B1.2 in 500 ml Dioxan gegeben, 2 h bei 60°C gerührt und abgekühlt. Das Produkt wurde dann durch Eingießen der Lösung in 41 Wasser gefällt. Der Niederschlag wurde abfiltriert, getrocknet und durch zweimaliges Umkristallisieren aus Dioxan gereinigt. Die Ausbeute des Produktes

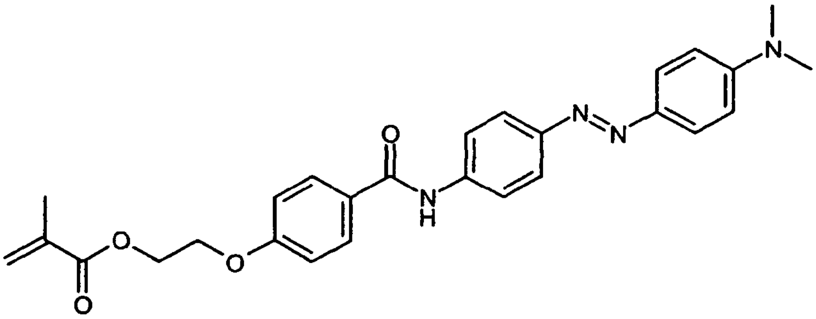

(B1.3)

betrug 124 g.

| | |
|---|---|
| Elementaranalyse: | $C_{27}H_{28}N_4O_4$ (472,55) |
| Ber.: | C68,63; H5,97; N11,86. |
| Gef.: | C68,10; H6,00 N11,40. |

1.4

100 g B1.3 wurden in einer Lösungsmittelmischung aus 200 ml Dioxan, 100 ml Methanol, 300 ml N-Methylpyrrolidinon (NMP) und 16 ml Wasser gelöst. 54 g einer 30 %-Lösung von Natriummethylat in Methanol und anschließend 16 g Wasser wurden zugegeben. Die Reaktionsmischung wurde 3 h bei Raumtemperatur gerührt und danach in 3000 ml Wasser gegeben. Der Niederschlag wurde auf dem Filter gesammelt und getrocknet. Die Ausbeute des Produktes

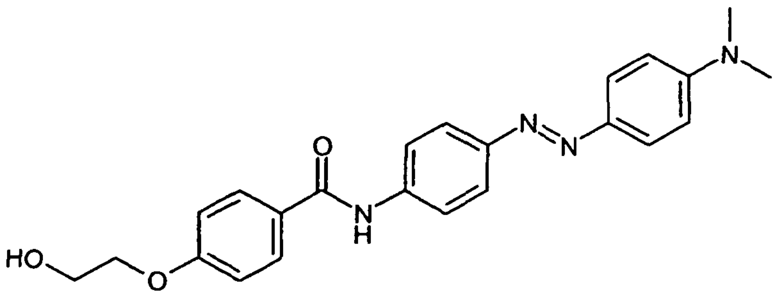

(B1.4)

betrug 100 g.

| | |
|---|---|
| Elementaranalyse: | $C_{23}H_{24}N_4O_3$ (404,47) |
| Ber.: | C68,30; H5,98; N13,85. |
| Gef.: | C67,50; H5,90 N13,60. |

1.5

72 g B1.4 wurden in einer Mischung aus 660 g Pyridin und 150 ml N-Methyl-pyrrolidinon (NMP) bei 60°C gelöst. Die Lösung wurde bis Raumtemperatur abgekühlt. 68 g p-Toluolsulfonsäurechlorid wurden portionsweise zugegeben. Man ließ das Reaktionsgemisch bei Raumtemperatur 24 h rühren. Die Reaktionsmischung wurde ins Wasser gebracht. Der Niederschlag wurde abfiltriert, mit Wasser und Methanol auf dem Filter gewaschen und in Vakuum bei 50°C getrocknet. Reinigung erfolgte durch absorptive Filtration durch 10 cm einer Kieselgel-Schicht in Cyclopentanon. Das Filtrat wurde am Rotationsverdampfer eingeengt. Die Kristalle wurden im Vakuum bei 50°C getrocknet. Die Ausbeute des Produktes

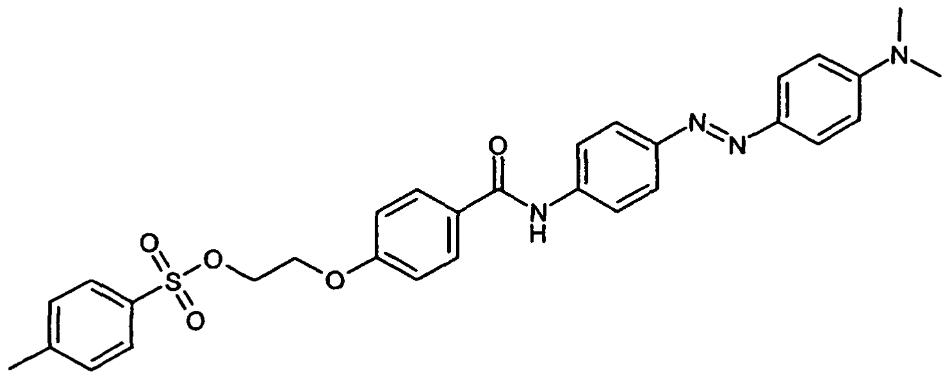

(B1.5)

betrug 30 g.

1.6

5,4 g B1.5 wurden in 20 g N-Methyl-pyrrolidinon (NMP) gelöst. 5 g $Na_2CO_3$ (wasserfrei) und 9,1 g 33 %-ige Methylamin-Lösung in Ethanol wurden zugegeben. Man ließ das Reaktionsgemisch bei 70°C 3 h rühren. Die Reaktionsmischung wurde ins Wasser eingebracht. Der Niederschlag wurde abfiltriert und im Vakuum getrocknet. Reinigung erfolgte chromatographisch auf Kieselgel in Dioxan/Ethanol (2:1). Die Ausbeute des Produktes

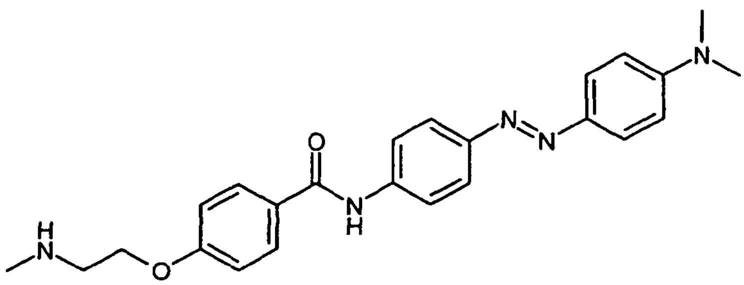

(B1.6)

betrug 2 g.

| | |
|---|---|
| Elementaranalyse: | $C_{24}H_{27}N_5O_2$ (417,52) |
| Ber.: | C69,04; H6,52; N16,77. |
| Gef.: | C68,60; H6,50 N16,30. |

1.7

Die Lösungen von 36,6 g B1.6 in 250 ml N-Methyl-pyrrolidinon (NMP) und 15,9 g Acrylsäurechlorid in 36 ml NMP wurden zusammengebracht, auf 70°C aufgeheizt und 1h gerührt. Das Reaktionsgemisch wurde in die Lösung von 92 g Natriumcarbonat in 3700 ml Wasser gegeben und 30 min gerührt. Der Niederschlag wurde abfiltriert und getrocknet. Reinigung erfolgte chromatographisch auf Kieselgel in Cyclopentanon. Die Ausbeute des Produktes

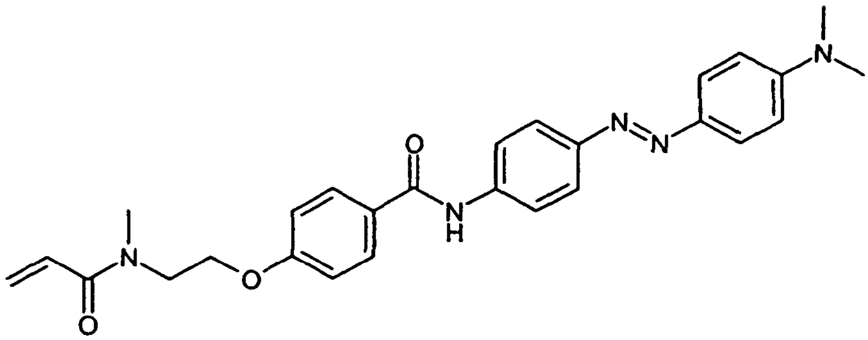

(B1.7)

betrug 9 g.
Schmelzpunkt = 222°C

| | |
|---|---|
| Elementaranalyse: | $C_{27}H_{29}N_5O_3$ (471,56) |
| Ber.: | C68,77; H6,20; N14,85. |
| Gef.: | C68,20; H6,20 N14,00. |

1.8

*a) Diazotierung*

400 ml Wasser und 70,5 g 4-Fluoroanilin wurden bei 60°C vorgelegt. In diese Suspension gab man 40 ml 37 %ige Salzsäure und rührte bis zur vollständigen Lösung. Diese Lösung wurde auf 0°C abgekühlt und 460 ml 37 %ige Salzsäure langsam zugegeben. Hydrochlorid von 4-Fluroanilin setzte sich in Form einer Paste ab. Unter Einhaltung einer Temperatur von 0 - 5°C tropfte man 161 g Natriumnitrit-Lösung (30 % in Wasser) innerhalb von 45 min zu. Es wurde 2 h bei 0 - 5°C nachgerührt. Eine klare Lösung entstand.

*b) Herstellung der Kupplungskomponente*

178 ml Natriumhydrogensulfitlösung (37 %) und 70 ml Formaldehydlösung (37 %) wurden bei 60°C vorgelegt. Bei dieser Temperatur gab man 59,6 g Anilin zu und rührte 2 h nach. Die Reaktionsmischung wurde nun in eine Rührapparatur überführt. In die Reaktionsmischung wurden 2000 ml Wasser gegeben und nochmals 30 min bei 60°C nachgerührt. Eine klare farblose Lösung entstand. Sie wurde unter Außenkühlung auf 10 -15°C abgekühlt.

*c) Kupplung*

Die obige Diazoniumsalzlösung wurde in einen Dosiertrichter überführt. Unter Einhaltung einer Temperatur von 10 - 20°C ließ man die Diazoniumsalzlösung in die Lösung der obigen Kupplungskomponente langsam zulaufen. Während der Zugabe der Diazoniumsalzlösung setzte man tropfenweise ca. 2500 ml Natronlaugelösung (10 %) zu, um den pH-Wert zwischen 5 und 6 zu halten. Das Reaktionsgemisch wurde 30 min nachgerührt. Der Niederschlag wurde abfiltriert und noch feucht zur Abspaltung der Schutzgruppe angesetzt.

*d) Abspaltung der Schutzgruppe*

Das noch feuchte Produkt aus e) wurde in 2000 ml Natronlaugelösung (20 %) gegeben und über Nacht bei 40°C gerührt. Unter Eisbadkühlung wurden langsam ca. 2,0 - 2,5 l Salzsäure zugegeben, um einen pH-Wert von 10 - 10,3 zu erreichen.

Es wurde kurz nachgerührt (ca. 30 min). Den Niederschlag sog man über eine große Nutsche ab, wusch mit Wasser nach und trocknete den Rückstand im Vakuumtrockenschrank bei 50°C bis zur vollständigen Trocknung.

*e) Reinigung des Produktes*

Das Rohprodukt aus d) wurde in eine Mischung aus Toluol und Ethylacetat (4:1) aufgekocht. Die Lösung wurde von nicht gelöstem Stoff abfiltriert und abgekühlt und durch eine Säule mit Kieselgel gegeben. Das Lösungsmittel wurde aus den relevanten Fraktionen auf dem Rotationsverdampfer entfernt. Die Substanz wurde im Vakuum getrocknet. Die Ausbeute des Produktes

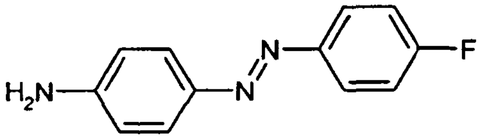

(B1.8)

betrug 23 g.

1.9

Analog 1.8 wurde eine Synthese mit 75 g 4-Cyanoanilin als Diazotierungskomponente durchgeführt. Das Rohprodukt wurde in 750 ml Dioxan aufgekocht. Die Lösung wurde von nicht gelöstem Stoff abfiltriert und abgekühlt und durch eine 10 -15 cm hohe Säule mit $Al_2O_3$ gegeben. Das Lösungsmittel wurde aus der durchlaufenden Lösung auf einem Rotationsverdampfer entfernt. Die Substanz wurde im Vakuum getrocknet. Die Ausbeute des Produktes

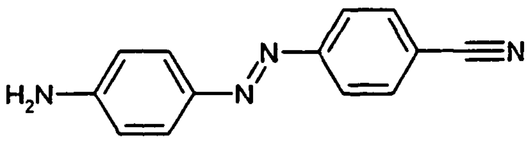

(B1.9)

betrug 97 g.
Schmelzpunkt = 194°C

| | |
|---|---|
| Elementaranalyse | $C_{13}H_{10}N_4$ (222,25) |
| Ber.: C | 70,26; H 4,54; N 25,21. |
| Gef.: C | 70,30; H 4,40; N 24,40. |

1.10

Analog 1.8 wurde eine Synthese durchgeführt, wobei 75 g 4-Cyanoanilin als Diazotierungskomponente und 68 g o-Toluidin für die Kupplungskomponente verwendet wurden. Die Ausbeute des Produktes

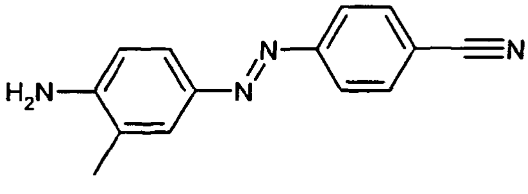

(B1.10)

betrug 110 g.

1.11

Aus 9,0 g B 1.8 wurde analog dem Beispiel 1.3 die Synthese des Produktes

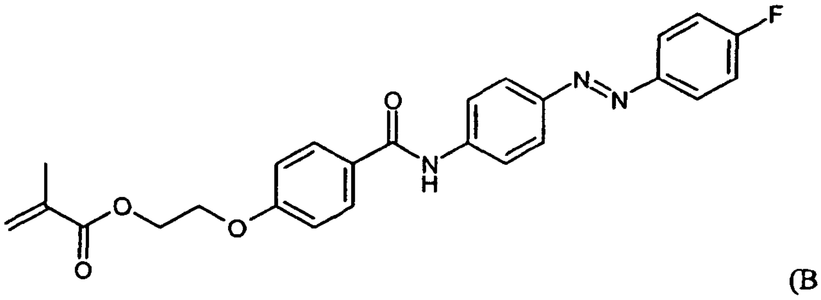

(B1.11)

durchgeführt. Die Reinigung erfolgte durch absorptive Filtration durch eine 10 cm-Schicht $Al_2O_3$ in Dioxan und eine nachfolgende Kristallisation aus Dioxan. Die Ausbeute betrug 7,9 g.

| | |
|---|---|
| Elementaranalyse | $C_{25}H_{22}$ $FN_3O_4$ (447,47) |
| Ber.: | C 67,11; H 4,96; F 4,25; N 9,39. |
| Gef.: | C 67,00; H 4,90; F 4,40; N 9,50. |

1.12

Aus 64 g B 1.8 wurde analog dem Beispiel 1.3 die Synthese des Produktes

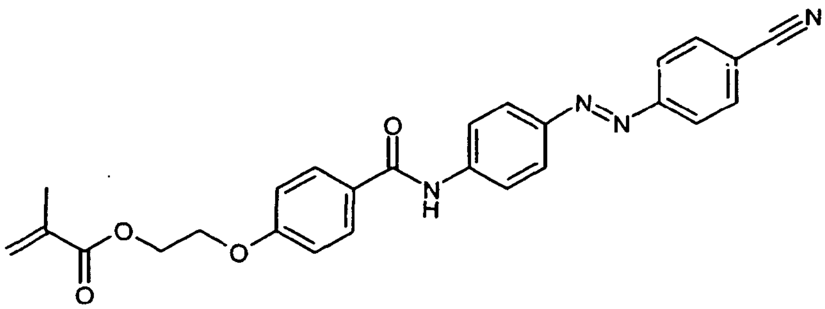

(B1.12)

durchgeführt. Die Reinigung erfolgte durch absorptive Filtration durch eine 10 cm-Schicht $Al_2O_3$ in Dioxan und eine nachfolgende Kristallisation aus Dioxan. Die Ausbeute betrug 97 g.

Die Substanz zeigte folgende Phasenübergänge: Schmelzpunkt = 174°C; flüssigkristalline Phase bis 204°C.

1.13

Zu einer Lösung von 10 g N-Methyl-N-(2-Methylamino-ethyl)-anilin in 30 ml Dioxan wurden 11 g Acrylsäurechlorid in 100 ml Dioxan gegeben, 24 h bei 90°C gerührt und abgekühlt. Das Lösungsmittel wurde aus dem Reaktionsgemisch auf einem Rotationsverdampfer entfernt. Die Reinigung erfolgte chromatographisch auf Kieselgel in Toluol/Ethylacetat (1:2). Die Ausbeute des Produktes

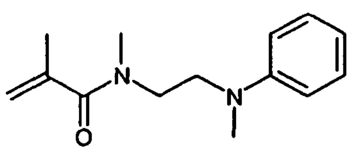

(B1.13)

betrug 5,5 g.

1.14

5,4 g B1.10 wurden in 40 ml Eisessig und 15 ml Salzsäure (37 %) unter Erwärmen gelöst und auf 0°C abgekühlt. Unter Einhaltung einer Temperatur von 0 - 5°C tropfte man 9 g Natriumnitrit-Lösung (30 % in Wasser) zu. Es wurde 1 h bei 0 - 5°C nachgerührt.

5,1 g B1.13 wurden in 170 ml Isopropanol vorgelegt. Die Diazoniumsalzlösung wurde in einem Dosiertrichter überführt. Unter Einhaltung einer Temperatur von 10°C und gleichzeitiger Zugabe von bis ca. 30 ml 20 %iger Natriumacetat-Lösung in Wasser gab man die Diazoniumsalzlösung nun langsam zu. Es wurde 1 h nachgerührt. Das Reaktionsgemisch wurde ins 11 Wasser gegossen. Das Produkt wurde in Methylenchlorid aufgenommen. Die Lösung wurde von der wässrigen Phase abgetrennt und mit Magnesiumsulfat getrocknet. Das Lösungsmittel wurde aus der Lösung auf dem Rotationsverdampfer entfernt. Die Reinigung erfolgte chromatographisch auf Kieselgel in Toluol/Ethylacetat (1:2).

Die Ausbeute des Produktes

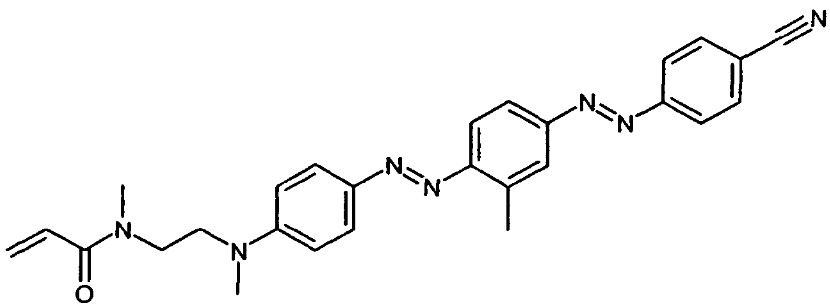

(B1.14)

betrug 1 g.
Schmelzpunkt = 118°C

| | |
|---|---|
| Elementaranalyse: | $C_{27}H_{27}N_7O$ (465,56) |
| Ber.: | C69,66; H5,85; N21,06. |
| Gef.: | C68,00; H5,90 N19,90. |

**Beispiele 2** (Polymersynthese):

2.1

15,0 g Monomer B1.12 wurden in 140 ml N,N-Dimethylformamid (DMF) bei 70°C gelöst. Nachdem das Monomer in Lösung gegangen war, spülte man die Apparatur noch eine halbe Stunde mit Argon, gab danach 0,75 g 2,2'-Azoisobuttersäuredinitril in 5,0 ml DMF zu und ließ diese Lösung zwei Tage unter Argonfluss rühren. Das Reaktionsgemisch wurde auf Raumtemperatur abgekühlt und durch Faltenfilter filtriert. DMF wurde aus der Lösung auf dem Rotationsverdampfer komplett entfernt. Der Rest wurde in 100 ml Methanol eine halbe Stunde unter Rückfluss aufgekocht. Die Methanollösung wurde danach vom Niederschlag abgegossen. Diesen Vorgang wiederholte man noch zweimal. Das fertige Produkt

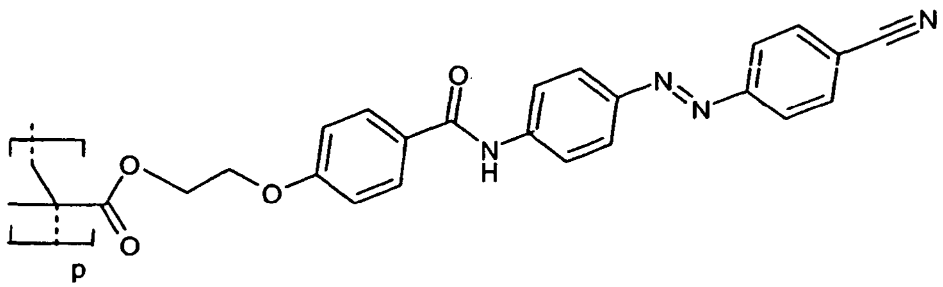

(B2.1)

wurde im Vakuum getrocknet. Ausbeute: 13,4 g.

2.2

Aus 15 g Monomer B1.3 wurde analog Beispiel 2.1 die Synthese des Polymers

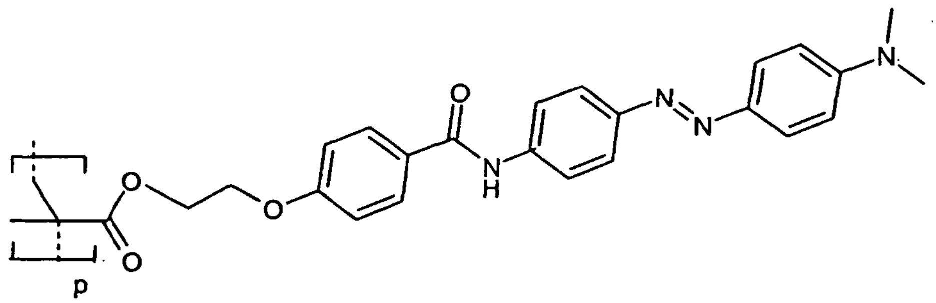

(B2.2)

durchgerührt. Die Ausbeute betrug 14,3 g.

2.3

Aus 5 g Monomer B1.10 wurde analog Beispiel 2.1 die Synthese des Polymers

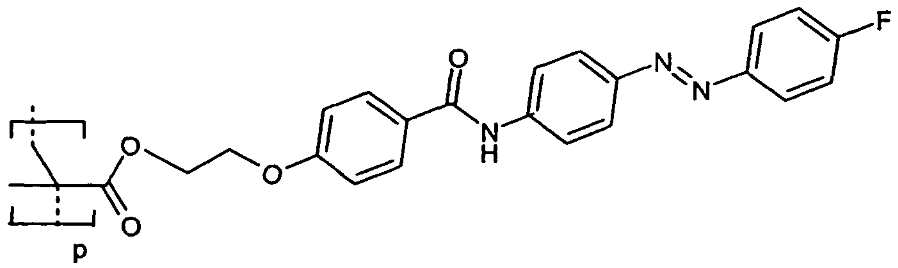

(B2.3)

durchgeführt. Die Ausbeute betrug 4,7 g.

2.4

Aus 1,3 g Monomer B1.7 wurde analog Beispiel 2.1 die Synthese des Polymers

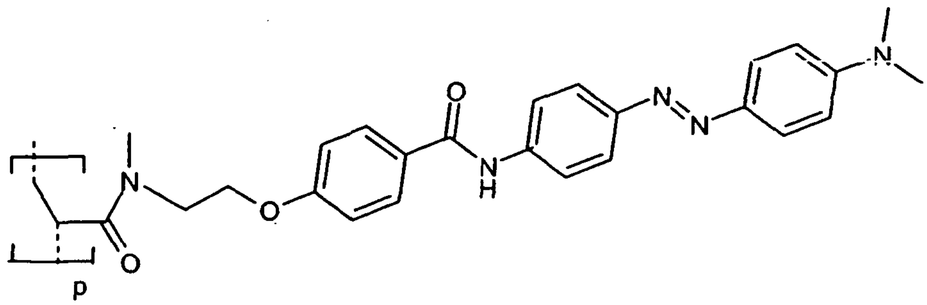

(B2.4)

durchgeführt. Die Reinigung des Polymers erfolgte durch dreimaliges Aufkochen in Toluol. Die Ausbeute betrug 1,0 g.

2.5

Aus 0,6 g Monomer B1.14 wurde analog Beispiel 2.4 die Synthese des Polymers

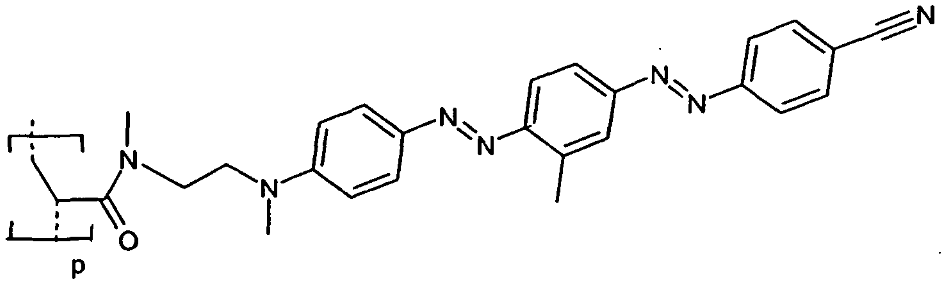

(B2.5)

durchgeführt. Die Ausbeute betrug 0,3 g.

2.6

Aus einer Mischung aus 5 g Monomer B 1.12 und 0,57 g Monomer B.2.6a

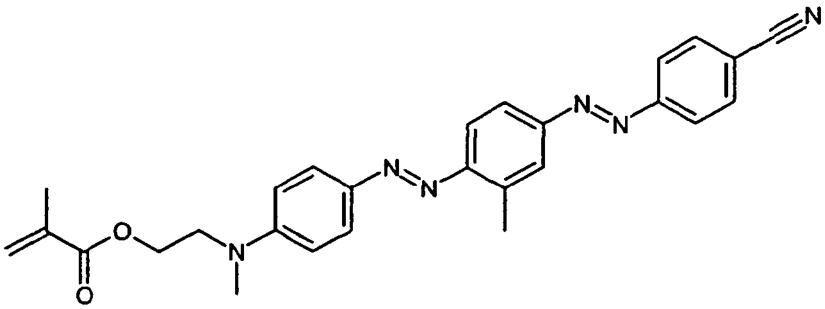

(B2.6a)

wurde analog Beispiel 2.1 das Copolymer

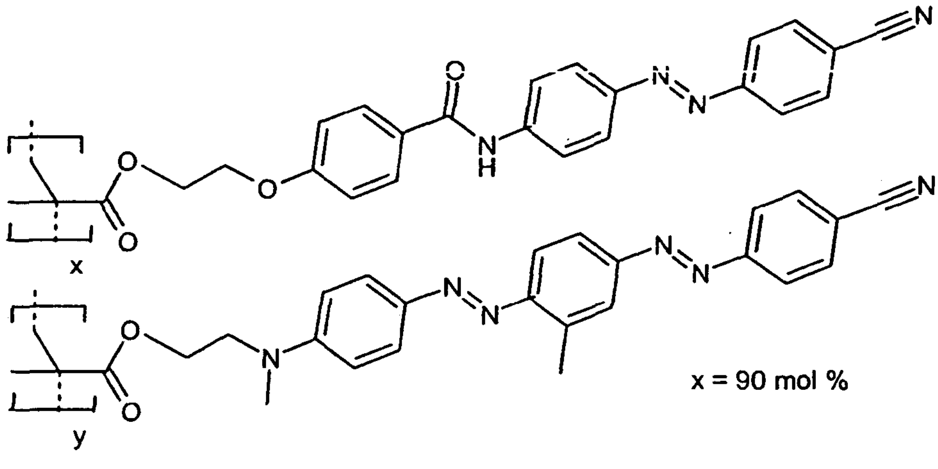

x = 90 mol %

(B2.6)

hergestellt. Die Ausbeute betrug 4,7 g.

2.7

Aus der Mischung aus 5 g Monomer B1.3 und 0,45 g bzw. 0,7 g N,N-Dimethylacrylamid wurden analog Beispiel 2.4 die Copolymere

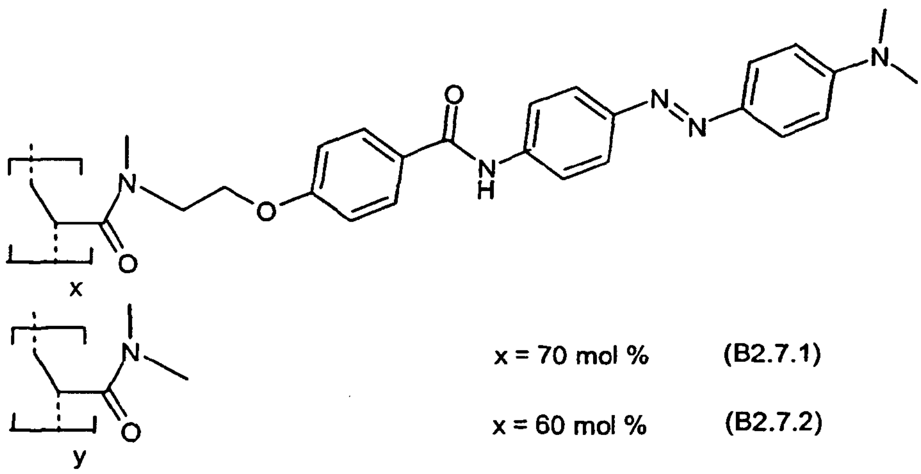

x = 70 mol % (B2.7.1)

x = 60 mol % (B2.7.2)

hergestellt. Die Ausbeute betrug 4,9 g bzw. 4,8 g.

2.8

Aus der Mischung aus 1,5 g Monomer B 1.14 und 0,137 g N,N-Dimethylacrylamid wurde analog Beispiel 2.4 das Copolymer

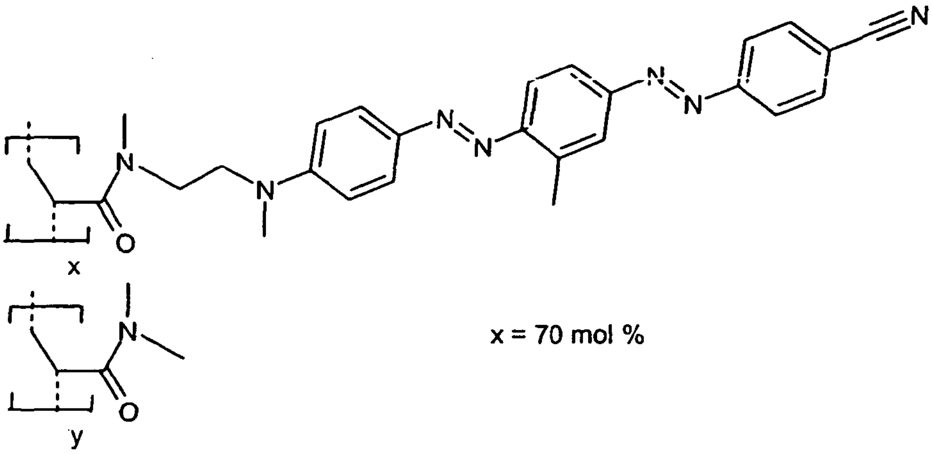

x = 70 mol %

(B2.8)

hergestellt. Die Ausbeute betrug 1,12 g.

2.9

Aus einer Mischung aus 1 g Monomer B1.7 und 0,1 g Monomer B.2.9a

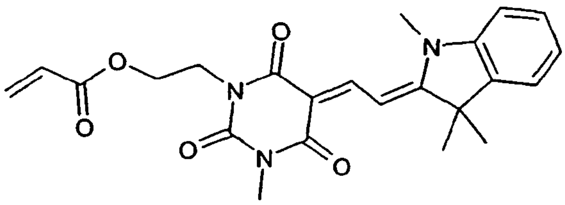

(B2.9a)

wurde analog Beispiel 2.4 das Copolymer

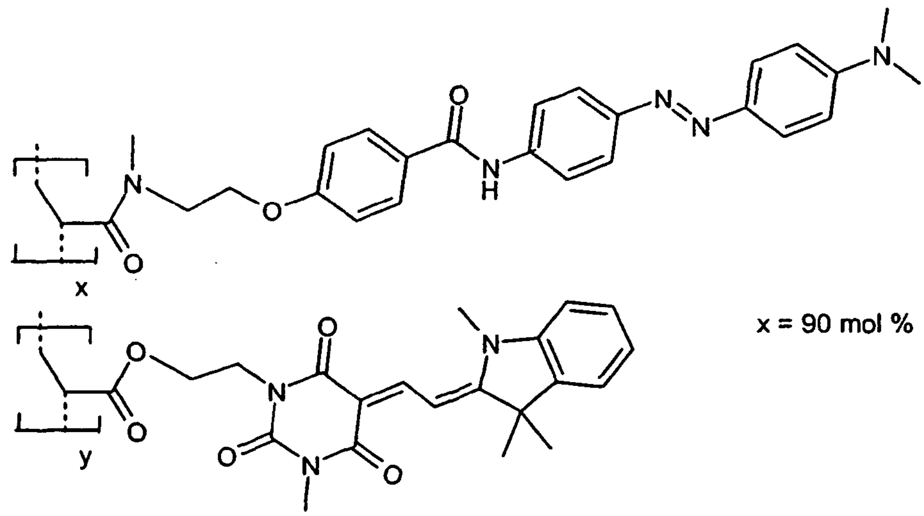

x = 90 mol %

(B2.9)

hergestellt. Die Ausbeute betrug 0,85 g.

2.10

Aus einer Mischung aus 2 g Monomer B1.3 und 1,42 g Monomer B.2.10a

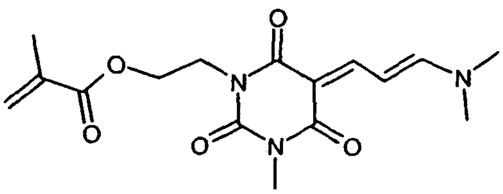

(B2.10a)

wurde analog Beispiel 2.4 das Copolymer

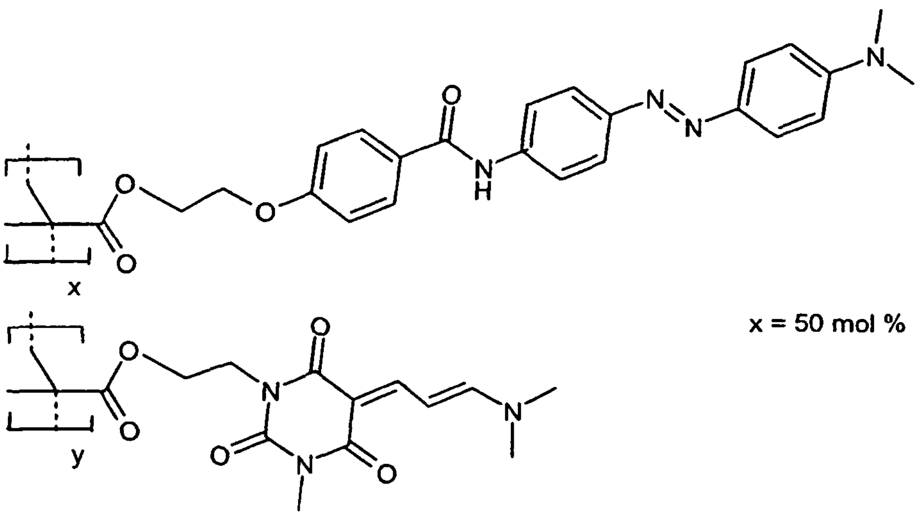

x = 50 mol %

(B2.10)

hergestellt. Die Ausbeute betrug 3,0 g.

**Beispiel 3:** (Vorbereitung der Polymerlösungen):

3.1

15,0 g Polymer B2.1 wurden in 100 ml Cyclopentanon bei 70°C gelöst. Die Lösung wurde auf Raumtemperatur abgekühlt und durch 0,45 μm- und anschließend durch 0,2 μm-Teflonfilter filtriert. Die Lösung blieb bei Raumtemperatur stabil und wurde für die Auftragung des Polymers B2.1 auf verschiedene Oberflächen, wie z.B. auf polymere Oberflächen und auf metallisierte Polymeroberflächen benutzt.

3.2

Analog Beispiel 3.1 wurde eine Lösung von 15,0 g Polymer B2.2 in 100 ml Cyclopentanon vorbereitet.

3.3

Analog Beispiel 3.1 wurde eine Lösung von 15,0 g Polymer B2.3 in 100 ml Cyclopentanon vorbereitet.

3.4

Analog Beispiel 3.1 wurde eine Lösung von 15,0 g Polymer B2.4 in 100 ml Cyclopentanon vorbereitet.

3.5

Analog Beispiel 3.1 wurde eine Lösung von 15,0 g Polymer B2.5 in 100 ml Cyclopentanon vorbereitet.

3.6

Analog Beispiel 3.1 wurde eine Lösung von 15,0 g Polymer B2.6 in 100 ml Cyclopentanon vorbereitet.

3.7

Analog Beispiel 3.1 wurde eine Lösung von 15,0 g Polymer B2.9 in 100 ml Cyclopentanon vorbereitet.

3.8

15,0 g Polymer B2.1 wurden in 100 ml einer Mischung aus 35 Gew.% Cyclopentanon und 65 Gew.% 2-Methoxyethanol bei 70°C gelöst. Die Lösung wurde auf Raumtemperatur abgekühlt und durch 0,45 μm- und anschließend durch 0,2 μm-Teflonfilter filtriert. Lösung blieb bei Raumtemperatur stabil und wurde für die Auftragung des Polymers B2.1 auf verschiedene Oberflächen, wie z.B. auf polymere Oberflächen und auf metallisierte Polymeroberflächen benutzt.

3.9

Analog Beispiel 3.8 wurde die Lösung von 15,0 g Polymer B2.6 in 100 ml Mischung aus 35 Gew.% Cyclopentanon und 65 Gew.% 2-Methoxyethanol vorbereitet.

3.10

15,0 g Polymer B2.4 wurden in 100 ml 2,2,3,3-Tetrafluoropropanol (TFP) bei 100°C gelöst. Die Lösung blieb bis 80°C stabil, bei weiterer Abkühlung fiel das Polymer aus. Das analoge Polymer aufPolymethacrylat-Basis (B2.2) löste sich in TFP nicht.

3.11

15,0 g Polymer B2.4 wurden in 100 ml 2,2,3,3-Tetrafluoropropanol (TFP) bei 100°C gelöst. Die Lösung blieb bis 90°C stabil, bei weiterer Abkühlung fiel das Polymer aus. Das analoge Polymer auf Polymethacrylat-Basis löste sich in TFP nicht.

3.12

15,0 g Polymer B2.7.1 wurden in 100 ml 2,2,3,3-Tetrafluoropropanol (TFP) bei 70°C gelöst. Die Lösung wurde auf 40°C abgekühlt, durch 0,45 μm- und anschließend durch 0,2 μm-Teflonfilter filtriert. Die Lösung blieb bei Raumtemperatur mehrere Stunden stabil und wurde für die Auftragung des Polymers B 2.7.1 auf verschiedene Oberflächen, wie z.B. auf polymere Oberflächen und auf metallisierte Polymeroberflächen benutzt. Beim längerem Stehen bildete sich bei Raumtemperatur ein Gel, das beim Erwärmen wieder aufgelöst werden konnte.

3.13

15,0 g Polymer B2.7.2 wurden in 100 ml 2,2,3,3-Tetrafluoropropanol (TFP) bei 70°C gelöst. Die Lösung wurde auf Raumtemperatur abgekühlt und durch 0,45 μm- und anschließend durch 0,2 μm-Teflonfilter filtriert. Die Lösung blieb bei Raumtemperatur stabil und wurde für die Auftragung des Polymers B 2.7.2 auf verschiedene Oberflächen, wie z.B. auf polymere Oberflächen und auf metallisierte Polymeroberflächen benutzt.

3.14

Analog Beispiel 3.13 wurde eine Lösung von 15,0 g Polymer B2.10 in 100 ml 2,2,3,3-Tetrafluoropropanol (TFP) vorbereitet.

**Beispiel 4:** (Beschichten von Glas- und Kunststoffoberflächen mit photoadressierbaren Polymeren)

4.1 Beschichten von Glassubstraten

Das Beschichten von 1 mm dicken Glassubstraten wurde mit Hilfe der Drehschleudertechnik ("spin coating") durchgeführt. Ein Spincoater "Karl Süss CT 60" wurde benutzt. Ein quadratischer Glasträger (26×26 mm), wurde auf der Drehbühne des Gerätes fixiert, mit der Lösung 3.1 bedeckt und für eine gewisse Zeit zum Drehen gebracht. In Abhängigkeit vom Drehprogramm des Gerätes (Beschleunigung, Umdrehungszahl und Drehzeit) bekam man transparente, amorphe Beschichtungen optischer Qualität von 0,2 bis 2,0 μm Dicke. Durch die Lagerung des beschichteten Glasträgers für 24 h bei Raumtemperatur im Vakuumschrank wurden Reste des Lösungsmittels aus den Beschichtungen entfernt.

4.2 Direktes Beschichten von Polycarbonatfolien

Direktes Beschichten von Polycarbonatfolien (PC-Folie z.B. Makrofol® von Bayer MaterialScience) ist nun aus bestimmten Lösungsmitteln möglich. Die Lösungsmittel dürfen Polycarbonat (PC) nicht anlösen und so die Oberfläche der Folie beschädigen. Es wurde als Lösungsmittel 2,2,3,3-Tetrafluoropropanol (TFP) verwendet. Für das direkte Beschichten des Polycarbonates kommen nur photoadressierbare Polymere in Frage, die in TFP löslich sind.

Für die Beschichtung wurde vorher ausgestanzte Folienstücke (z.B. Länge 85,725 mm; Breite 53,975 mm) verwendet. Die Dicke der PC-Folie variierte von 75 bis 750 μm. Ein Folienstück wurde auf der Drehbühne des o.g. Gerätes fixiert, mit der Lösung 3.13 bedeckt und für eine gewisse Zeit zum Drehen gebracht. In Abhängigkeit vom Drehprogramm des Gerätes (Beschleunigung, Umdrehungszahl und Drehzeit) bekam man transparente, amorphe Beschichtungen optischer Qualität von 0,2 bis 2,0 μm Dicke. Durch die Lagerung der beschichteten PC-Folienstücke für 24 h bei Raumtemperatur im Vakuumschrank wurden Reste des Lösungsmittels aus den Beschichtungen entfernt.

Analog wurden 10×10 cm große quadratische Folienstücke beschichtet, aus denen anschließend Stücke in Scheckkartengröße und in anderen Formaten (z.B. Streifen: Länge 85,725 mm; Breite 5,54 mm) ausgestanzt und später für die Kartenproduktion benutzt wurden.

4.3 Beschichten von metallisierten Polycarbonatfolien

4.3.1 Metallisierung von PC-Folien

Als Reflektionsschicht wurde Silber benutzt, das mittels Magnetronsputtern aufgebracht wurde. Der Ar-Druck während des Beschichtens betrug $5 \times 10^{-3}$ mbar. Es wurde mit einer Leistungsdichte von 1,3 $W/cm^2$ gesputtert. Die Schichtdicke wurde mit einem mechanischen Profilometer Alphastep 500 (Fa.Tencor) gemessen. Die Dicke wurde zwischen 100 und 400 nm eingestellt.

4.3.2 Auftragen von photoadressierbaren Polymeren direkt auf eine Metallbeschichtung mit einer Dicke von weniger als 300 nm

Die Metallbeschichtungen von Polycarbonatfolien, deren Dicke zwischen 50 und 300 nm liegt, bieten zwar Spiegeleigenschaften, die für optische oder holographische Speicherung ausreichend sind, weisen aber keine ausreichenden Barriere-Funktionen gegen aggressive Lösungsmittel auf. Cyclopentanon z.B. greift durch die zahlreichen Mikrodefekte dieser Metallbeschichtungen das Polycarbonat an, was zu einer starken Minderung der optischen Qualität der Speicherschicht führt. In diesem Fall wurde nur Lösungen in 2,2,3,3-Tetrafluoropropanol (TFP) eingesetzt. Die Beschichtung erfolgte analog Beispiel B 4.1 auf die metallisierte Oberfläche der PC-Folie.

4.3.3 Auftragen von photoadressierbaren Polymeren auf eine Metallbeschichtung mit einer Dicke von weniger als 300 nm, wobei vorher eine dünne polymere Barriereschicht auf die Metallschicht aufgebracht wird

Um photoadressierbare Polymere auf Polymethacrylat-Basis, die sich nicht in TFP, sondern nur in Cyclopentanon oder in Cyclopentanon-haltigen Mischungen lösen, auf dünn metallisierte Polycarbonatfolien auftragen zu können, muss die Metallisierung vorher mit einer dünnen sog. polymeren Barriereschicht bedeckt werden, die gegen solche Lösungsmittel beständig ist. Diese Barriereschicht muss optisch klar, transparent und doppelbrechungsfrei sein, um optische Speicher- und Leseprozesse nicht zu beeinflussen. Die hydrierten Polystyrole und hydrierten Polystyrol-Polyisopren-Copolymere (US 6 492 468) weisen diese Eigenschaften auf.

Die Barriereschicht wurde auf folgende Weise hergestellt: 1g an hydriertem Triblockcopolymer mit einem Gesamtanteil an Vinylcyclohexan-Einheiten von 90 mol.% (US 6 492 468) wurde in 9 g n-Heptan gelöst. Die Lösung wurde durch 0,45 μm- und anschließend durch 0,2 μm-Teflonfilter filtriert. Die Lösung wurde mittels Spincoating-Verfahren (siehe Beispiel 4.2) auf die metallisierte PC-Folie gebracht. In Abhängigkeit vom Drehprogramm des Gerätes (Beschleunigung, Umdrehungszahl und Drehzeit) entstanden dabei farblose, transparente, amorphe Beschichtungen optischer Qualität von 0,05 bis 0,2 μm Dicke. Durch die Lagerung der so beschichteten PC-Folien für 24 h bei Raumtemperatur im Vakuumschrank wurden Reste des Lösungsmittels aus den Beschichtungen entfernt. Die nachfolgende Beschichtung mit photoadressierbaren Polymeren erfolgte aus den Lösungen B 3.8 und B 3.9 analog dem Beispiel 4.2. In Abhängigkeit vom Drehprogramm des Gerätes (Beschleunigung, Umdrehungszahl und Drehzeit) bekam man transparente, amorphe Beschichtungen optischer Qualität von 0,2 bis 2,0 μm Dicke.

4.3.4 Auftragen von photoadressierbaren Polymeren auf eine Metallbeschichtung mit einer Dicke von mehr als 300 nm

Die Beschichtung von metallisierten PC-Folien, bei denen die Metallschicht dicker als 300 nm ist, mit photoadressierbaren Polymeren aus aggressiven Lösungsmitteln, wie Cyclopentanon, ist direkt möglich.

Die photoadressierbaren Polymere wurden analog dem Beispiel B 4.1 analog aus den Lösungen B 3.1 bis B 3.7 direkt auf die metallisierte PC-Folien aufgebracht. In Abhängigkeit vom Drehprogramm des Gerätes (Beschleunigung, Umdrehungszahl und Drehzeit) erhielt man transparente, amorphe Beschichtungen optischer Qualität von 0,2 bis 2,0 μm Dicke.

4.4 Beschichten von Coextrusionsfolien aus Polycarbonat/Polysulfon (PC/PSU4.4.1 Metallisierung der PC/PSU-Folie auf der PSU-Seite

Die Metallisierung erfolgte gemäß Beispiel 4.3.1.

4.4.2 Auftragen von photoadressierbaren Polymeren auf die Polysulfon-Seite der PC/PSU-Coextrusionsfolien sowie auf metallisierte Coextrusionsfolien

Die Polysulfon-Seite der Folie bzw. die metallisierte Polysulfon-Seite der Folie wurde analog Beispiel B 4.2 mit photoadressierbaren Polymeren aus den Lösungen B 3.1 bis B 3.7 mittels Spincoating beschichtet.

Die Beschichtung mit photoadressierbaren Polymeren wurde auch mit den Lösungen gemäß Beispielen 3.12 bis 3.14 durchgeführt.

4.5 Beschichten von metallisierten Polycarbonatfolien durch Rakeln

Eine mit einer Silber-Schicht metallisierte, 750 μm dicke Polycarbonat-Folie wurde mit Polymer B 2.7.2 beschichtet. Eine 50 μm dicke Schicht der Lösung B3.13 mit der Konzentration 150 g Polymer auf 1000 ml Lösungsmittel wurde durch Rakeln auf die metallisierte Folie gleichmäßig aufgebracht. Nach Trocknung im Vakuum ergab sich eine 4,07 μm dicke Beschichtung. Bei einer Verdünnung der Lösung auf 70 g pro 1000 ml ergab sich eine 1,65 μm dicke

Beschichtung. Weitere Verdünnungen ergaben folgende Schichtdicken: 60 g pro 1000 ml : 1,50 µm; 50 g pro 1000 ml : 1,08 µm; 30 g pro 1000 ml : 0,53 µm Schichtdicke.

**Beispiel 5:** (Herstellung eines Datenträgers / einer Karte)

Die mit photoadressierbaren Polymeren beschichteten Kunststofffolien gemäß Beispiel 4 wurden auf der Seite des PAP und gegebenenfalls zusätzlich auf der Seite der Kunststofffolie beschichtet bzw. mit Folien abgedeckt. Diese Beschichtungen/Folien verbessern die mechanische Belastbarkeit, schützen die Informationsschicht vor mechanischen und sonstigen (Wärme, Licht, Feuchte) Einflüssen. Die Schichten können durch Vakuum-Beschichtung, Lackieren oder Laminieren aufgebracht werden.

5.1 Abdecken der photoadressierbaren Polymerschicht mit Siliziumoxid

Es wurde eine Siliziumoxid-Beschichtung als äußere Schutzschicht aufgebracht. Als transparente Schutzschicht wurden $SiO_2$-Partikel mit einem Durchmesser von etwa 200 nm mittels Elektronenstrahlverdampfer auf der PAP-Schicht der Folie aus Beispiel 4.2 abgeschieden. Die Leistung des Elektronenstrahls betrug dabei 1,5 kW und der Prozess wurde im Hochvakuum bei einem Druck von $5\times10^{-7}$ mbar durchgeführt.

5.2 Auftragen eines UV-härtenden Lackes

Auf die Siliziumoxid-Beschichtung aus Beispiel 5.1 wurde zusätzlich eine Schicht aus einem UV-härtenden Lack aufgebracht. Die Lackschicht wurde in Form eines DVD-Klebers "DAICURE CLEAR SD-645" der Fa. DIC Europe GmbH durch Spincoating analog Beispiel 4.2 aufgebracht und durch UV-Belichtung (90 Watt; 312 nm) ausgehärtet. Durch entsprechende Anpassung des Drehprogramms des Spincoaters (Beschleunigung, Umdrehungszahl und Drehzeit) wurden transparente, amorphe, 50 µm dicke Beschichtungen optischer Qualität erhalten. Die Beschichtungen könnten in Abhängigkeit vom Drehprogramm des Spincoaters von 1 bis 100 µm Dicke eingestellt werden.

5.3 Laminieren (Schutz der PAP-Schicht mittels Polycarbonatfolie)

In einer hydraulischen Heißpresse der Fa. Bürkle Typ LA 62 wurden die gemäß Beispiel 4.4 hergestellten, PAP beschichteten Coextrusionsfolien (PC/PSU-Folien) mit einer strukturierten bzw. glatten Polycarbonatfolie laminiert, wobei die PAP Schicht von der Polycarbonatfolie abgedeckt wurde. Die Lamination erfolgte zwischen zwei polierten Edelstahlplatten (Spiegelblech) und einer Druckausgleichslage (Presspolster). Die Laminationsparameter (Temperatur, Zeit, Druck) wurden so eingestellt, dass die PAP-Beschichtung keine sichtbaren Beschädigungen und der Kartenrohling keinen Planlagefehler aufwies.

Kartenaufbau: Schutzschicht:

Polycarbonatfolie 50 µm

Einleger: PC/PSU/A1/PAP * ca. 250 µm

Polycarbonatfolie weiß eingefärbt ca. 500 µm

(* Größe des Einlegers vergleichbar mit der eines Magnetstreifens in einer Karte

**Kartenrohlinee für die Beschichtung**

In einer hydraulischen Heißpresse (Hersteller Fa. Bürkle) wurden die PC/PSU/A1 Muster im Einzelnutzenaufbau (eine Lage pro Laminationsvorgang) mit der bedampften Seite zum Spiegelblech eingelegt. Die Lamination erfolgte zwischen zwei polierten Edelstahlplatten und einer Druckausgleichslage (Presspolster). Die Laminationsparameter (Temperatur, Zeit, Druck) wurden so eingestellt, dass die Aluminium-Beschichtung keine sichtbaren Beschädigungen und der Kartenrohling keinen Planlagefehler aufwies.

Kartenaufbau: Schutzschicht: bedampfte Polycarbonat/Polysufoncoextrusionsfolie PC/PSU/A1 Polycarbonatfolie weiß und transparent ca.500 µm

**Beispiel 6:** Messung der holographischen Eigenschaften

Der zeitliche Verlauf der Beugungseffizienz während der holographischen Belichtung wurde bei einem photoadressierbaren Polymer (PAP) der Struktur (B2.2) für unterschiedliche Polarisationszustände ermittelt. Die sog. holographischen Wachstumskurven wurden hinsichtlich der erreichten Beugungseffizienzen ausgewertet und der Polarisationszustand, mit dem sich die größte Beugungseffizienz erzielen lässt, ermittelt.

Fig. 1 zeigt den holographischen Messaufbau.

Die Beschichtung der Trägerfolie mit einem photoadressierbaren Polymer (B2.2) erfolgte gemäß Beispiel 4. Die Dicke der PAP-Schicht lag bei ca. 1,6 μm.

Die PC/PSU-Trägerfolien wurden anstelle der Metallschicht mit einer Barriereschicht aus hydriertem Polystyrol gem. Beispiel 4.3.3 versehen, um den Datenträger in Transmission auslesen zu können.

Die so beschichteten Trägerfolien wurden auf der Seite des PAP und zusätzlich auf der Seite der Kunststsfffolic mit Folien gemäß Beispiel 5 abgedeckt.

Kartenaufbau:

Schutzschicht: Polycarbonatfolie 50 μm
Einleger: PC/PSU/ hydriertes Polystyrol/PAP ca. 250 μm
Polycarbonatfolie ca. 500 μm

Die Proben wurden mit einem frequenzverdoppelten Neodym-Yag-Laser bei einer Wellenlänge λ=532 nm belichtet. Hierbei wurden zwei ebene Wellen erzeugt, die auf der Probe unter einem Winkel von 40° überlagert wurden. Der Laserstrahl wurde dazu auf einen Durchmesser von ca. 30 mm aufgeweitet und kollimiert.

Es wurde eine Metallblende mit 6 mm Durchmesser verwendet, um die belichtete Fläche und damit den Energieeintrag in die Probe zu begrenzen.

Durch den Einsatz von λ/2- und λ/4-Verzögerungsplättchen wurden die verschiedenen Polarisationen der belichtenden Strahlen eingestellt.

Die Beugungseffizienz wurde während der Belichtung mit einem HeNe-Laser bei λ=633 nm gemessen und aufgezeichnet.

Es wurden Messungen für folgende Polarisationen durchgeführt: Zirkular (gegenläufig), linear parallel, linear unter 45°, linear unter 90°. Bei zirkularer Belichtung wurde außerdem das Verhalten für unterschiedliche Energiedichten untersucht.

Für alle Polarisationen wurde eine Messreihe mit 5 bis 10 Proben belichtet. Die Auswertung zeigt den Mittelwert und den Maximalwert aller Proben. Angegeben wird die Beugungseffizienz in % gegenüber der Belichtungszeit in Sekunden, bei gegebener Leistungsdichte von 100 mW/cm$^2$.

| *Polarisation* | *Werte nach 100s* | *Sättigungswerte* |
|---|---|---|
| Gegenläufig zirkular | 16%/20% | 52 % / 57% nach 600 s |
| Linear parallel | 3% | 7% / 8 % nach 350 s |
| Linear 45° | 5% / 7% | 22% / 28 % nach 600 s |
| Linear 90° | 3% / 4% | 16% / 20 % nach 700 s |

**Ergebnisse:**

Die erzeugten holographischen Gitter verhielten sich unterschiedlich in Abhängigkeit von der Polarisation des Lichts. Alle getesteten Polarisationen führten zu holographischer Beugung. Bevorzugt ist gegenläufig zirkulare Polarisation, weil sie die höchsten Beugeeffizienzen brachte.

Gemessen an anderen holographischen Filmen zeigen PAP selbst bei sehr dünnen Schichtdicken von ca. 1,6 μm hohe Beugeeffizienzen.

Die beobachteten Effekte können in der Polarisationsoptik verwendet werden.

<u>**Beispiel 7:**</u> Bestimmung der lichtinduzierten Doppelbrechung von photoadressierbaren Polymeren

Proben gemäß Beispiel 6 wurden auf Basis der PAP B2.1 - B2.10 hergestellt. Die so präparierten Proben wurden von der Polymerseite mit polarisiertem Laserlicht in senkrechter Inzidenz bestrahlt (Schreibvorgang). Als Lichtquelle diente ein Verdi-Laser (Firma Coherent) mit einer Wellenlänge von 532 nm. Die Intensität dieses Lasers betrug 1000 mW/cm$^2$. In den Seitengruppenmolekülen der Polymere wurden trans-cis-trans-Isomerisierungszyklen induziert, was zu einem Aufbau einer Nettoorientierung der Moleküle weg von der Polarisationsrichtung des Lasers führte. Diese Moleküldynamik zeigte sich makroskopisch in einer sich ausbildenden Doppelbrechung $\Delta n = n_y - n_x$ in der Polymerfilme-

bene. Der Brechungsindex in Richtung der Polarisation des Laserlichts ($n_x$) sank bei diesem Prozess, während der Brechungsindex senkrecht zur Polarisationsrichtung (ny) anwuchs. Die Dynamik lief bei den gegebenen Belichtungsparametern im Minutenbereich ab.

Experimentell wurde der zeitliche Verlauf der induzierten Doppelbrechung bei einer Wellenlänge von 633 nm mit einem Helium-Neon-Laser (typische Intensität: 10 mW/cm$^2$) bestimmt. Dieser Vorgang heißt Auslesen der Doppelbrechung. Das auf die Polymerschicht einfallende Licht dieses Lasers (sog. Leselaser) nahm einen festen Winkel zwischen 15° und 35° zur Normalen der Schicht ein. Lese- und Schreiblicht überlappten auf der Polymerschicht. Die Polarisationsrichtung des Leselichts nahm in der Polymerfilmebene einen Winkel von 45° zur Polarisation des Schreiblichts ein. Sie wurde beim Durchlaufen der Polymerschicht gedreht, sofern die Schicht doppelbrechend war. Diese Drehung ging einher mit einem Anwachsen der Leselichtintensität $I_s$ nach einem Analysator, der nach der Probe im Strahlengang stand und Licht senkrecht zur ursprünglichen Polarisationsrichtung durchließ. In gleichem Maß, wie $I_s$ anstieg, nahm die Intensität $I_p$ ab. $I_p$ ist definiert als die transmittierte Intensität nach einem ebenso positionierten Analysator, der aber die ursprüngliche Polarisationsrichtung des Leselasers selektiert. Experimentell wurden die beiden Anteile der Polarisationsrichtung parallel und senkrecht zur ursprünglichen Richtung über einen polarisierenden Strahlteiler getrennt und mit Hilfe zweier Si-Photodioden detektiert. Die Doppelbrechung $\Delta n$ errechnet sich über folgende Relation aus den gemessenen Intensitäten:

$$\Delta n = \frac{\lambda}{\pi d} \arcsin \sqrt{\frac{I_s}{I_s + I_p}}$$

wobei d die Dicke der Polymerschicht und $\lambda$ = 633 nm die Lichtwellenlänge des Leselasers ist. In dieser Formel wird näherungsweise angenommen, dass senkrecht zur Polymerschicht ausgelesen wird.

**Schreib-/Löschexerimente mit dem Polymer B2.4:**

Die Doppelbrechung $\Delta n$ stieg während der ersten Belichtung monoton an. Nach 2-minütiger Belichtung der Probe durch den Schreiblaser war der erste Schreibvorgang abgeschlossen. Die resultierende Phasenverschiebung $\Delta\phi = 2\pi \Delta n\, d / \lambda$ überschritt während dieses und der folgenden Schreibvorgänge den Wert $\Delta\phi$= n nicht. Die Doppelbrechung n der Polymerschicht hatte nach 2 min nahezu einen Maximalwert von $\Delta n = 0{,}213 \pm 0{,}002$ erreicht.

$\Delta n$ wurde durch Drehen der Polarisationsrichtung des Schreiblichts um 90° gelöscht. Dieser Löschvorgang ist abgeschlossen, sobald $\Delta n$=0 ist. Dies ist gleichbedeutend mit einem Wert $I_s$=0, der über eine Diode detektiert wird. Das Löschen geschah hier deutlich schneller als das Schreiben.

Weitere Schreib-/Löschvorgänge wurden nach gleichem Muster direkt an diesen ersten angeschlossen, die Diodensignale aufgezeichnet und die Doppelbrechung errechnet. Der Aufbau der Doppelbrechung bei dem zweiten und allen folgenden Schreibvorgängen war von der Geschwindigkeit und der Höhe vergleichbar mit dem ersten.

Ergebnisse:

Das Polymer bleicht nicht aus, was an einer sukzessiven Abnahme der Doppelbrechung abzulesen wäre.

Das Polymer übertrifft den erfindungsgemäß ganz besonders bevorzugten lichtinduzierten Doppelbrechungswert von 0,15.

**Vergleich der Belichtungseigenschaften verschiedener PAP-Materialien:**

Wellenlänge des Lichtes $\lambda$=532 nm ; Leistungsdichte : 1000 mW/cm$^2$; Übergangsmodus

| PAP-Schicht aus Beispiel : | Filmdicke [$\mu$m] | Optische Dichte bei 532 nm | Maximal erreichte Doppelbrechung $\Delta n_{max}$ | Zeit bis $\Delta n = 0{,}9 \Delta n_{max}$ [sec] |
|---|---|---|---|---|
| 2.1 | 0,58 | 0,05 | 0,16 | 740 s |
| 2.2 | 0,58 | 0,21 | 0,20 | 45 s |
| 2.3 | 1,50 | 0,03 | 0,18 | 4200 s |
| 2.4 | 0,21 | 0,12 | 0,21 | 140 s |

(fortgesetzt)

| PAP-Schicht aus Beispiel : | Filmdicke [μm] | Optische Dichte bei 532 nm | Maximal erreichte Doppelbrechung $\Delta n_{max}$ | Zeit bis $\Delta n=0{,}9\Delta n_{max}$ [sec] |
|---|---|---|---|---|
| 2.5 | 0,20 | 0,81 | 0,21 | 5 s |
| 2.6 | 0,54 | 0,36 | 0,30 | 540 s |
| 2.7.1 | 1,60 | 0,34 | 0,13 | 53 s |
| 2.7.2 | 0,40 | 0,12 | 0,12 | 62 s |
| 2.8 | 0,47 | 1,60 | 0,19 | 12 s |
| 2.9 | 0,26 | 0,09 | 0,13 | 85 s |
| 2.10 | 0,30 | 0,04 | 0,07 | 77 s |

Ergebnis: Alle untersuchten Polymere übertrafen den erfindungsgemäß bevorzugten Doppelbrechungswert $\Delta n=0{,}07$.

**Patentansprüche**

**1.** Verbundfolie bestehend aus folgendem Schichtaufbau:

a) Speicherschicht aus einem photoadressierbaren organischen Polymer mit Struktureinheiten auf Basis der Verbindungen der Formel (I)

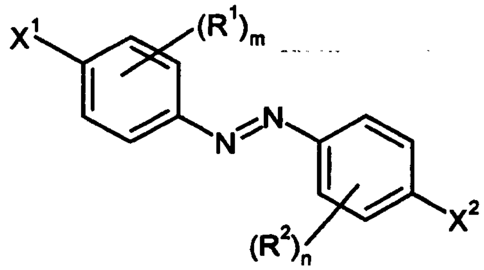

(I),

worin

$R^1$ und $R^2$ unabhängig voneinander für Wasserstoff oder einen nichtionischen Substituenten stehen,
m und n unabhängig voneinander für eine ganze Zahl von 0 bis 4, vorzugsweise 0 bis 2 stehen,
$X^1$ und $X^2$ wobei $X^{1'}$-$R^3$ bzw. $X^{2'}$-$R^4$ bedeuten,
$X^{1'}$ und $X^{2'}$ für eine direkte Bindung, -O-, -S-, -(N-$R^5$)-, -C($R^6R^7$)-, -(C=O)-, -(CO-O)-, -(CO-N$R^5$)-, -($SO_2$)-, -($SO_2$-O)-, -($SO_2$-N$R^5$)-, -(C=N$R^8$)-, -(CN$R^8$-N$R^5$)- oder -N=N- stehen,
$R^3$, $R^4$, $R^5$ und $R^8$ unabhängig voneinander für Wasserstoff, $C_1$- bis $C_{20}$-Alkyl, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)- stehen,
$R^6$ und $R^7$ unabhängig voneinander für Wasserstoff, Halogen, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl stehen oder

$X^{1'}$-$R^3$ und $X^{2'}$-$R^4$ für Wasserstoff, Halogen, Cyan, Nitro, $CF_3$ oder $CCl_3$ stehen,
b) gegebenenfalls transparente Barriereschicht,
c) wenigstens eine metallische Reflektionsschicht,
d) gegebenenfalls Klebeschicht,
e) Polycarbonat basierte Substratschicht,

wobei für den Fall, dass die metallische Reflektionsschicht nicht dicker als 300 nm ist, wenigstens eine Barriereschicht vorhanden ist, welche weinigstens ein polymeres Barrierematerial ausgewählt aus der Gruppe Polyethylen, teilkristallines PET, Polysulfon, hydriertes Polystyrol und dessen Copolymere mit Isopren und Butadien aufweist.

2. Verbundfolie gemäß Anspruch 1, **dadurch gekennzeichnet, dass** das photoadressierbare organische Polymer in der Speicherschicht a) Struktureinheiten auf Basis der Verbindungen der Formel (II) aufweist

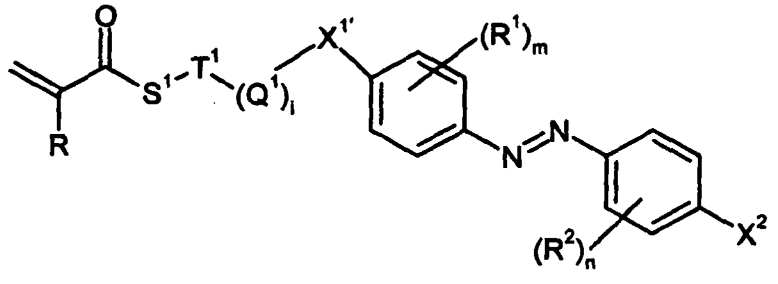

(II),

worin

$X^2$, $R^1$, $R^2$, m, n und $X^{1'}$ die in Anspruch 1 angegebene Bedeutung haben,
R für Wasserstoff oder Methyl steht und
$Q^1$ für -O-, -S-, -(N-$R^5$)-, -C($R^6R^7$)-, -(C=O)-, -(CO-O)-, -(CO-$NR^5$)-, -($SO_2$)-, -($SO_2$-O)-, -($SO_2$-$NR^5$)-, -(C=$NR^8$)-, -($CNR^8$-$NR^5$)-, -$(CH_2)_p$-, p- oder m-$C_6H_4$- oder einen zweibindigen Rest der folgenden Strukturen

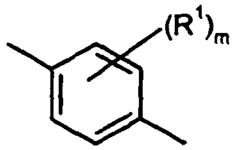

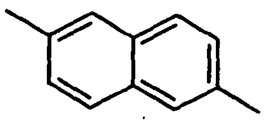

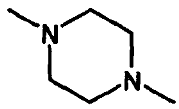

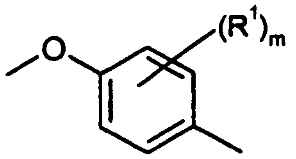

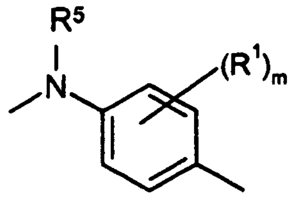

steht,
i für eine ganze Zahl von 0 bis 4 steht, wobei für i >1 die einzelnen $Q^1$ verschiedene Bedeutungen haben können,
$T^1$ für -$(CH_2)_p$- steht, wobei die Kette durch -O-, -$NR^9$-, oder -$OSiR^{10}{}_2O$- unterbrochen sein kann,
$S^1$ für eine direkte Bindung, -O-, -S- oder -$NR^9$- steht,
p für eine ganze Zahl von 2 bis 12, vorzugsweise 2 bis 8, insbesondere 2 bis 4 steht,
$R^9$ für Wasserstoff, Methyl, Ethyl oder Propyl steht,
$R^{10}$ für Methyl oder Ethyl steht,

und $R^5$ bis $R^8$ die in Anspruch 1 angegebene Bedeutung haben.

3. Verbundfolie gemäß Anspruch 1, **dadurch gekennzeichnet, dass** das photoadressierbare organische Polymer in der Speicherschicht a) Struktureinheiten auf Basis der Verbindungen der Formel (II) aufweist

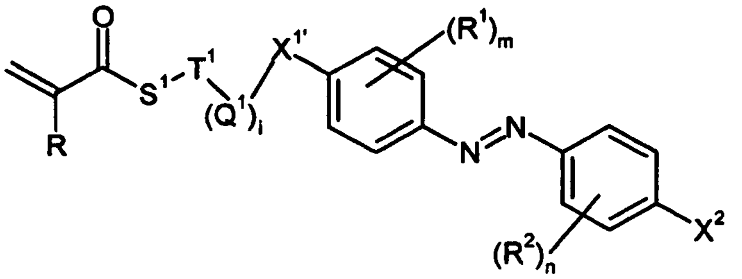

(II),

worin

$X^{1'}$ -(CO-O)-, -(CO-$NR^5$)- oder -N=N- bedeutet,
$Q^1$

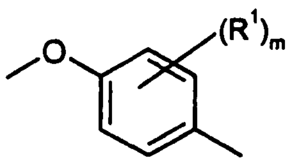

,

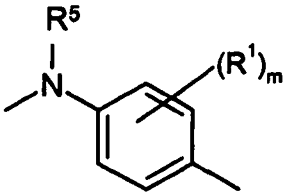

bedeutet,
i 1 bedeutet und
$S^1$ -$NR^9$- ist

und die übrigen Reste die in Anspruch 2 angegebene Bedeutung haben.

**4.** Optischer Datenspeicher, der optisches Schreiben, permanentes Speichern, optisches Auslesen, optisches Wiederbeschreiben und Schutz gegen Löschung oder Überschreiben von Informationen in der Speicherschicht gewährleistet, bestehend aus

I) einer oder mehreren transparenten Doppelbrechungsarmen, nicht streuenden, amorphen Abdeckschichten
II) einer Verbundfolie gemäß einem oder mehreren der Ansprüche 1 bis 3
III) gegebenenfalls einem Träger aus Kunststoff in Form mindestens einer Kunststoffolie oder eines Kunststofffolienverbundes oder eines Kunststoffsubstrates.

**5.** Verfahren zur Herstellung einer Verbundfolie gemäß den Ansprüchen 1 bis 3, wobei

A) das photoadressierbare Polymer in einem Lösungsmittel aufgelöst wird,
B) die Lösung auf ein Substrat aufgetragen wird bzw. auf die transparente Barriereschicht bzw. auf die Reflexionsschicht falls vorhanden,
C) das Lösungsmittel verdampft wird und die Verbundfolie getrocknet wird.

**6.** Verfahren zur Herstellung eines optischen Datenspeichers gemäß Anspruch 4, wobei

i) auf die gemäß Anspruch 5 hergestellte Verbundfolie auf der Seite der Speicherschicht transparente Deckschichten aufgebracht werden,
ii) gegebenenfalls auf die andere Seite (Substratseite) der Verbundfolie ein Träger aus Kunststoff aufgebracht wird.

**7.** Verwendung des optischen Datenspeichers gemäß Anspruch 4 als Speicherkarte, Smart Card, Ausweis, Dokument, Etikett mit Speicherfunktionen, Plakette mit Speicherfunktionen.

**8.** Verwendung gemäß Anspruch 7, **dadurch gekennzeichnet, dass** das Dokument eine Identifikationskarte ist.

**9.** Verfahren zur Herstellung einer Verbundfolie, wobei

A) ein photoadressierbares organisches Polymer, welches Struktureinheiten auf Basis der Verbindungen der Formel (II) aufweist,

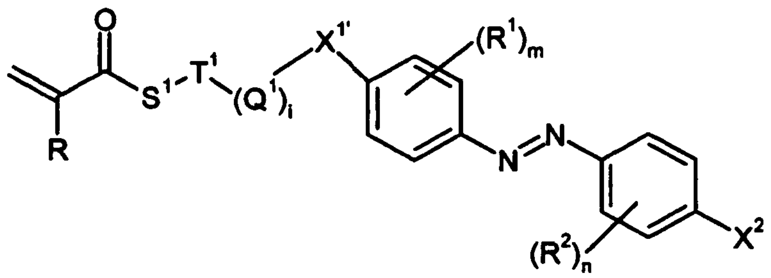

(II),

worin

$R^1$ und $R^2$ unabhängig voneinander für Wasserstoff oder einen nichtionischen Substituenten stehen,
m und n unabhängig voneinander für eine ganze Zahl von 0 bis 4, vorzugsweise 0 bis 2 stehen,
$X^2$ $X^{1'}$-$R^3$ bzw. $X^{2'}$-$R^4$ bedeuten.
$X^{1'}$ und $X^{2'}$ für eine direkte Bindung, -O-, -S-, -(N-$R^5$)-. -C($R^6R^7$)-, -(C=O)-, -(CO-O)--(CO-N$R^5$)-, -($SO_2$)-, -($SO_2$-O)-, -($SO_2$-N$R^5$)-, -(C=N$R^8$)-, -(CN$R^8$-N$R^5$)- oder -N=N- stehen,
$R^3$, $R^4$, $R^5$ und $R^8$ unabhangig voneinander für Wasserstoff, $C_1$- bis $C_{20}$-Alkyl, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_3$- bis $C_{10}$-Cycloalky-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)- stehen,
$R^6$ und $R^7$ unabhängig voneinander für Wasserstoff, Halogen, $C_1$- bis $C_{20}$-Alkyl, $C_1$- bis $C_{20}$-Alkoxy, $C_3$- bis $C_{10}$-Cycloalkyl, $C_2$- bis $C_{12}$-Alkenyl oder $C_6$- bis $C_{10}$-Aryl stehen oder
$X^{1'}$-$R^3$ und $X^{2'}$-$R^4$ für Wasserstoff, Halogen, Cyan, Nitro, $CF_3$ oder $CCl_3$ stehen,
R für Wasserstoff oder Methyl steht und
$Q^1$ für -O-, -S-, -(N-$R^5$)-, -C($R^6R^7$)-, -(C=O)-, -(CO-O)-, -(CO-N$R^5$)-, -($SO_2$)-, -($SO_2$-O)-, -($SO_2$-N$R^5$)-, -(C=N$R^8$)-, -(CN$R^8$-N$R^5$)-, -($CH_2$)$_p$-, p- oder m-$C_6H_4$- oder einen zweibindigen Rest der folgenden Strukturen

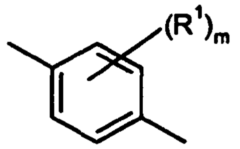
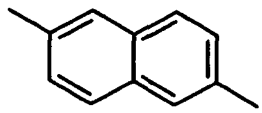
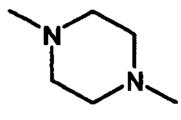

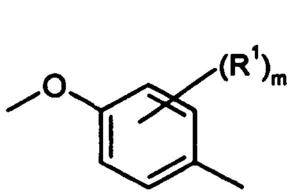
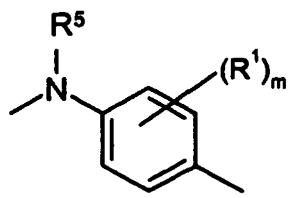

steht,
i für eine ganze Zahl von 0 bis 4 steht, wobei für i >1 die einzelnen $O^1$ verschiedene Bedeutungen haben können,
$T^1$ für -($CH_2$)$_p$- steht, wobei die Kette durch -O-, -N$R^9$-, oder -OSi$R^{10}{}_2$O- unterbrochen sein kann, $S^1$ für -N$R^9$- steht,
p für eine ganze Zahl von 2 bis 12, vorzugsweise 2 bis 8. insbesondere 2 bis 4 steht,
$R^9$ für Wasserstoff, Methyl, Ethyl oder Propyl steht, und
$R^{10}$ für Methyl oder Ethyl steht,

in 2,2,3,3-Tetrafluoropropanol gelöst wird.
B) die Lösung auf ein Substrat bzw. falls vorhanden auf die transparente Barriereschicht bzw. auf die Reflexionsschicht, aufgetragen wird.
C) das Lösungsmittel verdampft und die Verbundfolie getrocknet wird.

**10.** Verfahren zur Herstellung eines optischen Datenspeichers, wobei

i) auf die gemäß Anspruch 9 hergestellte Verbundfolie auf der Seite der Speicherschicht transparente Deckschichten aufgebracht werden,
ii) gegebenenfalls auf die andere Seite (Substratseite) der Verbundfolie ein Träger aus Kunststoff aufgebracht wird.

**11.** Optischer Datenspeicher, der optisches Schreiben, permanentes Speichern, optisches Auslesen, optisches Wiederbeschreiben und Schutz gegen Löschung oder Überschreiben von Informationen in der Speicherschicht gewährleistet, bestehend aus

I) einer oder mehreren transparenten Doppelbrechungsarmen, nicht streuenden, amorphen Abdeckschichten
II) einer Verbundfolie hergestellt nach Anspruch 9
III) gegebenenfalls einem Träger aus Kunststoff in Form mindestens einer Kunststofffolie oder eines Kunststofffolienverbundes oder eines Kunststoffsubstrates.

**Claims**

**1.** Composite film consisting of the following layer structure:

a) memory layer composed of a photoaddressable organic polymer with structural units based on compounds of the formula (I)

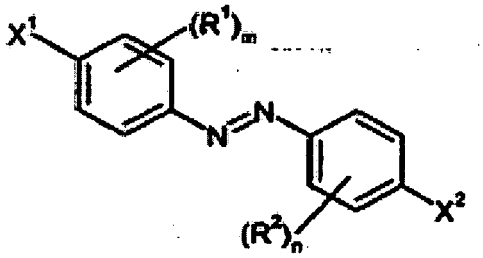

(I

in which
$R^1$ and $R^2$ are each independently hydrogen or a nonionic substituent,
m and n are each independently an integer from 0 to 4, preferably 0 to 2,
$X^1$ and $X^2$ are each $X^{1'}$-$R^3$ or $X^{2'}$-$R^4$,
where

$X^{1'}$ and $X^{2'}$ are each a direct bond, -O-, -S-, -(N-$R^5$)-, -C($R^6R^7$)-, - (C=O) -, - (CO-O) -,- (CO-N$R^5$)-, -($SO_2$)-, -($SO_2$-O)-, -($SO_2$-N$R^5$)-, -(C=N$R^8$)-, -(CN$R^8$-N$R^5$)- or -N=N-,
$R^3$, $R^4$, $R^5$ and $R^8$ are each independently hydrogen, $C_1$- to $C_{20}$-alkyl, $C_3$- to $C_{10}$-cycloalkyl, $C_2$- to $C_{20}$-alkenyl, $C_6$- to $C_{10}$-aryl, $C_1$- to $C_{20}$-alkyl-(C=O) -, $C_3$- to $C_{10}$-cycloalkyl-(C=O)-, $C_2$- to $C_{20}$-alkenyl-(C=O)-, $C_6$- to $C_{10}$-aryl-(C=O)-, $C_1$- to $C_{20}$-alkyl-($SO_2$)-, $C_3$- to $C_{10}$-cycloalkyl-($SO_2$)-, $C_2$- to $C_{20}$-alkenyl-($SO_2$)- or $C_6$- to $C_{10}$-aryl-($SO_2$)-,
$R^6$ and $R^7$ are each independently hydrogen, halogen, $C_1$- to $C_{20}$-alkyl, $C_1$- to $C_{20}$-alkoxy, $C_3$- to $C_{10}$-cycloalkyl, $C_2$- to $C_{20}$-alkenyl or $C_6$- to $C_{10}$-aryl, or
$X^{1'}$-$R^3$ and $X^{2'}$-$R^4$ are each hydrogen, halogen, cyano, nitro, $CF_3$ or $CCl_3$,

b) optionally transparent barrier layer,
c) at least one metallic reflection layer,
d) optionally adhesive layer,

e) polycarbonate-based substrate layer,

where, in the case that the metallic reflection layer is not thicker than 300 nm, at least one barrier layer comprising at least one polymeric barrier material selected from the group of polyethylene, semicrystalline PET, polysulphone, hydrogenated polystyrene and copolymers thereof with isoprene and butadiene is present.

2. Composite film according to Claim 1, **characterized in that** the photoaddressable organic polymer in the storage layer a) has structural units based on compounds of the formula (II)

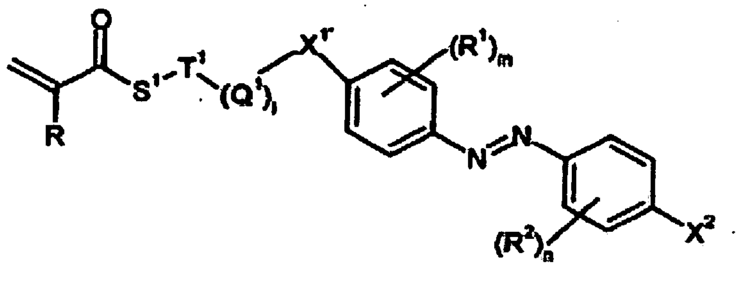

(II

in which

$X^2$, $R^1$, $R^2$, m, n and $X^{1'}$ are each as defined in Claim 1,
R is hydrogen or methyl and
$Q^1$ is -O-, -S-, -(N-$R^5$)-, -C($R^6R^7$)-, -(C=O)-, -(COO) -, - (CO-$NR^5$) -, -($SO_2$)-, -($SO_2$-O)-, -($SO_2$-$NR^5$)-, -(C=$NR^8$)-, -($CNR^8$-$NR^5$)-, -$(CH_2)_p$-, p- or m-$C_6H_4$- or a divalent radical of the following structures

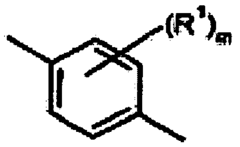

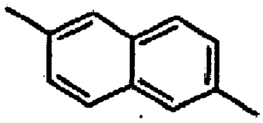

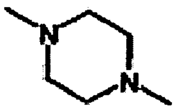

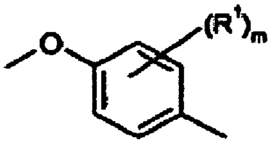

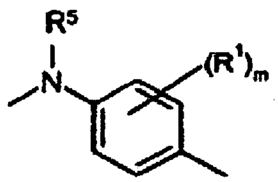

i is an integer from 0 to 4, where, when i > 1, the individual $Q^1$ may have different definitions,
$T^1$ is -$(CH_2)_p$-, where the chain may be interrupted by -O-, -$NR^9$-, or -$OSiR^{10}{}_2O$-,
$S^1$ is a direct bond, -O-, -S- or -$NR^9$-,
p is an integer from 2 to 12, preferably 2 to 8, especially 2 to 4,
$R^9$ is hydrogen, methyl, ethyl or propyl,
$R^{10}$ is methyl or ethyl,
and $R^5$ to $R^8$ are each as defined in Claim 1.

3. Composite film according to Claim 1, **characterized in that** the photoaddressable organic polymer in the storage layer a) has structural units based on the compounds of the formula (II)

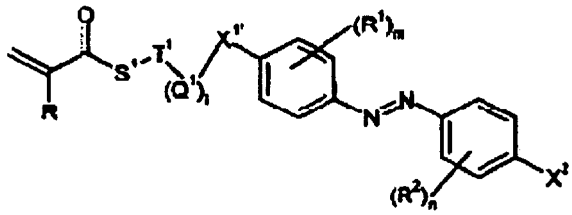

(II)

in which

$X^{1'}$ is - (CO-O) -, - (CO-$NR^5$) - or -N=N-,
$Q^1$ is

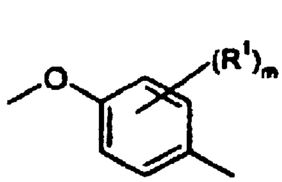

,

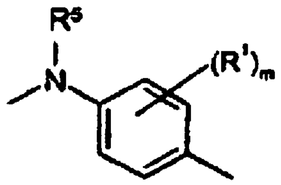

,

i is 1 and
$S^1$ is -$NR^9$-

and the other radicals are as defined in Claim 2.

4. Optical data memory which allows optical writing, permanent storage, optical readout, optical rewriting and protection against deletion or overwriting of information in the memory layer, consisting of

I) one or more transparent, low-birefringence, non-scattering, amorphous cover layers
II) a composite film according to one or more of Claims 1 to 3
III) optionally a polymeric carrier in the form of at least one polymer film or of a polymer film composite or of a polymer substrate.

5. Process for producing a composite film according to Claims 1 to 3, wherein

A) the photoaddressable polymer is dissolved in a solvent,
B) the solution is applied to a substrate or to the transparent barrier layer or to the reflection layer if present,
C) the solvent is evaporated and the composite film is dried.

6. Process for producing an optical data memory according to Claim 4, wherein

i) transparent outer layers are applied to the composite film produced according to Claim 5 on the side of the memory layer,
ii) optionally, a polymeric carrier is applied to the other side (substrate side) of the composite film.

7. Use of the optical data memory according to Claim 4 as a memory card, smart card, identity card, document, label with memory functions, tag with memory functions.

8. Use according to Claim 7, **characterized in that** the document is an identification card.

9. Process for producing a composite film, wherein

A) a photoaddressable organic polymer which has structural units based on compounds of the formula (II)

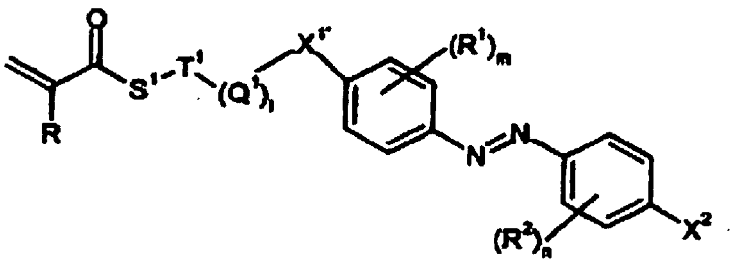

(II

in which

$R^1$ and $R^2$ are each independently hydrogen or a nonionic substituent,
m and n are each independently an integer from 0 to 4, preferably 0 to 2,
$X^2$ is $X^{1'}$-$R^3$ or $X^{2'}$-$R^4$,
$X^{1'}$ and $X^{2'}$ are each a direct bond, -O-, -S-, -(N-$R^5$)-, -C($R^6R^7$)-, -(C=O)-, - (CO-O) -, -(CO-$NR^5$)-, -($SO_2$)-, -($SO_2$-O)-, -($SO_2$-$NR^5$)-, -(C=$NR^8$)-, -($CNR^8$-$NR^5$)- or -N=N-,
$R^3$, $R^4$, $R^5$ and $R^8$ are each independently hydrogen, $C_1$- to $C_{20}$-alkyl, $C_3$- to $C_{10}$-cycloalkyl, $C_2$- to $C_{20}$-alkenyl, $C_6$- to $C_{10}$-aryl, $C_1$- to $C_{20}$-alkyl-(C=O)-, $C_3$- to $C_{10}$-cycloalkyl-(C=O)-, $C_2$- to $C_{20}$-alkenyl- (C=O) - , $C_6$- to $C_{10}$-aryl- (C=O) -, $C_1$- to $C_{20}$-alkyl-($SO_2$)-, $C_3$- to $C_{10}$-cycloalkyl-($SO_2$)-, $C_2$- to $C_{20}$-alkenyl-($SO_2$)- or $C_6$-to $C_{10}$-aryl-($SO_2$)-,
$R^6$ and $R^7$ are each independently hydrogen, halogen, $C_1$- to $C_{20}$-alkyl, $C_1$- to $C_{20}$-alkoxy, $C_3$- to $C_{10}$-cycloalkyl, $C_2$- to $C_{20}$-alkenyl or $C_6$- to $C_{10}$-aryl, or
$X^{1'}$-$R^3$ and $X^{2'}$-$R^4$ are each hydrogen, halogen, cyano, nitro, $CF_3$ or $CCl_3$,
R is hydrogen or methyl and
$Q^1$ is -O-, -S-, -(N-$R^5$)-, -C($R^6R^7$)-, -(C=O)-, -(CO-0)-, -(CO-$NR^5$)-, -($SO_2$)-, -($SO_2$-O)-, -($SO_2$-$NR^5$)-, -(C=$NR^8$)-, -($CNR^8$-$NR^5$)-, -$(CH_2)_p$-, p- or m-$C_6H_4$- or a divalent radical of the following structures

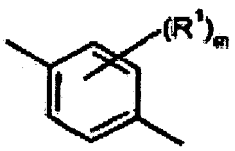
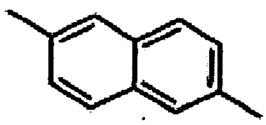
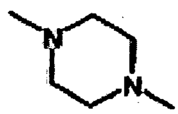

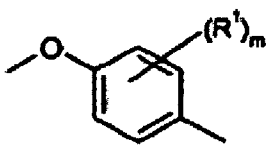
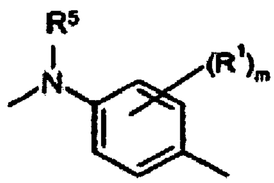

i is an integer from 0 to 4, where, when i > 1, the individual $Q^1$ may have different definitions,
$T^1$ is -$(CH_2)_p$-, where the chain may be interrupted by -O-, -$NR^9$-, or -$OSiR^{10}{}_2O$-,
$S^1$ is -$NR^9$-,
p is an integer from 2 to 12, preferably 2 to 8, especially 2 to 4,
$R^9$ is hydrogen, methyl, ethyl or propyl, and
$R^{10}$ is methyl or ethyl,

is dissolved in 2,2,3,3-tetrafluoropropanol,
B) the solution is applied to a substrate or, if present, to the transparent barrier layer or to the reflection layer,
C) the solvent is evaporated and the composite film is dried.

**10.** Process for producing an optical data memory, wherein

i) transparent outer layers are applied to the composite film produced according to Claim 9 on the side of the memory layer,
ii) optionally, a polymeric carrier is applied to the other side (substrate side) of the composite film.

**11.** Optical data memory which allows optical writing, permanent storage, optical readout, optical rewriting and protection against deletion or overwriting of information in the memory layer, consisting of

I) one or more transparent, low-birefringence, non-scattering, amorphous cover layers
II) a composite film produced according to Claim 9
III) optionally a polymeric carrier in the form of at least one polymer film or of a polymer film composite or of a polymer substrate.

## Revendications

**1.** Feuille composite constituée par la structure à couches suivante :

a) couche de stockage en un polymère organique photoadressable présentant des unités structurelles à base des composés de formule (I)

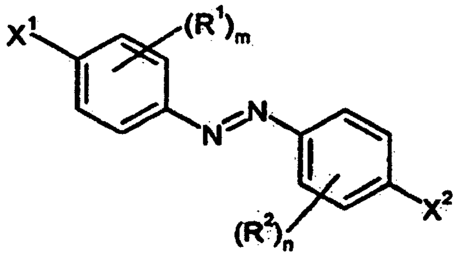

(I);

où

$R^1$ et $R^2$ indépendamment l'un de l'autre, représentent hydrogène ou un substituant non ionique,
m et n indépendamment l'un de l'autre, représentent un nombre entier de 0 à 4, de préférence de 0 à 2,
$X^1$ et $X^2$ où signifient $X^{1'}$-$R^3$ ou, selon le cas, $X^{2'}$-$R^4$,
$X^{1'}$ et $X^{2'}$ représentent une liaison directe, -O-, -S-, -(N-$R^5$)-, -C($R^6R^7$)-, - (C=O) -, - (CO-O) -, -(CO-N$R^5$)-, -($SO_2$)-, -($SO_2$-O)-, ($SO_2$-N$R^5$) -(C=N$R^8$)-, -(CN$R^8$-N$R^5$)- ou -N=N-,
$R^3$ , $R^4$ , $R^5$ et $R^8$ indépendamment l'un de l'autre, représentent hydrogène, $C_1$-$C_{20}$-alkyle, $C_3$-$C_{10}$-cycloalkyle, $C_2$-$C_{20}$-alcényle, $C_6$- $C_{10}$-aryle, $C_1$-$C_{20}$-alkyl-(C=O)-, $C_3$-$C_{10}$-cycloalkyl-(C=O)-, $C_2$-$C_{20}$-alcényl-(C=O)-, $C_6$-$C_{10}$-aryl-(C=O) -, $C_1$-$C_{20}$-alkyl-($SO_2$)-, $C_3$-$C_{10}$-cycloalkyl-($SO_2$)-, $C_2$-$C_{20}$-alcényl-($SO_2$)- ou $C_6$-$C_{10}$-aryl-($SO_2$)-,
$R^6$ et $R^7$ indépendamment l'un de l'autre, représentent hydrogène, halogène, $C_1$-$C_{20}$-alkyle, $C_1$-$C_{20}$-alcoxy, $C_3$-$C_{10}$-cycloalkyle, $C_2$-$C_{20}$-alcényle ou $C_6$-$C_{10}$-aryle ou
$X^{1'}$-$R^3$ et $X^{2'}$-$R^4$ représentent hydrogène, halogène, cyano, nitro, $CF_3$ ou $CCl_3$,

b) le cas échéant une couche transparente formant une barrière,
c) au moins une couche de réflexion métallisée,
d) le cas échéant une couche adhésive,
e) une couche de substrat à base de polycarbonate où, pour le cas où la couche de réflexion métallisée n'est pas plus épaisse que 300 nm, il existe au moins une couche formant une barrière qui présente au moins un matériau polymère formant une barrière choisi dans le groupe formé par le polyéthylène, le PET partiellement cristallin, la polysulfone, le polystyrène hydrogéné et ses copolymères avec l'isoprène et le butadiène.

**2.** Feuille composite selon la revendication 1, **caractérisée en ce que** le polymère organique photoadressable dans la couche de stockage a) présente des unités structurelles à base des composés de formule (II)

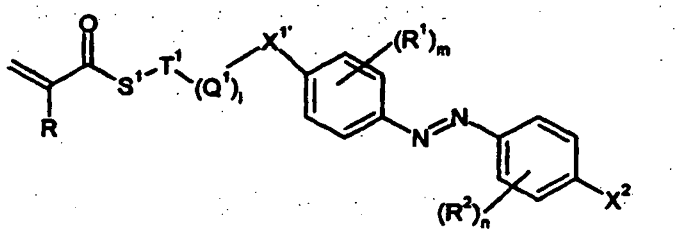

(II),

où

$X^2$, $R^1$, $R^2$, m, n et $X^{1'}$ présentent la signification indiquée dans la revendication 1,
R représente hydrogène ou méthyle et
$Q^1$ représente -O-, -S-, $-(N-R^5)-$, $-C(R^6R^7)-$, -(C=O)-, -(CO-O)-, $-(CO-NR^5)-$, $-(SO_2)-$, $-(SO_2-O)-$, $-(SO_2-NR^5)-$, $-(C=NR^8)-$, $-(CNR^8-NR^5)-$, $-(CH_2)_p-$, p- ou m-$C_6H_4$- ou un radical divalent présentant les structures suivantes

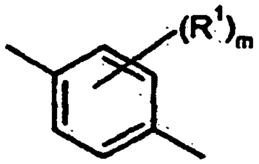

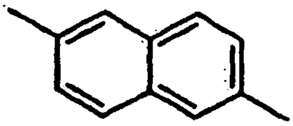

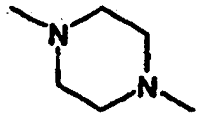

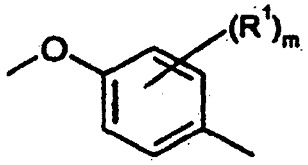

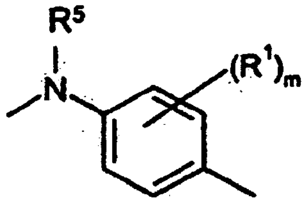

i représente un nombre entier de 0 à 4, les différents $Q^1$ pouvant avoir des significations différentes pour i > 1,
$T^1$ représente $-(CH_2)_p-$, la chaîne pouvant être interrompue par -O-, $-NR^9-$, ou $-OSiR^{10}{}_2O-$,
$S^1$ représente une liaison directe, -O-, -S- ou $-NR^9-$,
p représente un nombre entier de 2 à 12, de préférence de 2 à 8, en particulier de 2 à 4,
$R^9$ représente hydrogène, méthyle, éthyle ou propyle,
$R^{10}$ représente méthyle ou éthyle,

et $R^5$ à $R^8$ présentent la signification indiquée dans la revendication 1.

3. Feuille composite selon la revendication 1, **caractérisée en ce que** le polymère organique photoadressable dans la couche de stockage a) présente des unités structurelles à base des composés de formule (II)
où

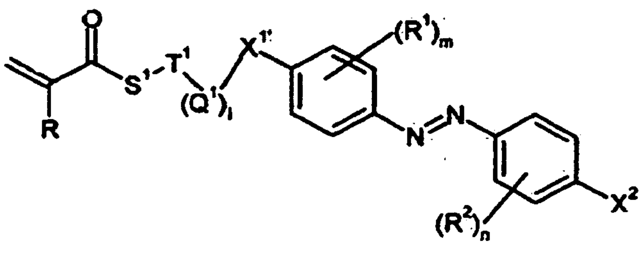

(II),

$X^{1'}$ signifie -(CO-O)-, $-(CO-NR^5)-$ ou -N=N-,
$Q^1$ signifie

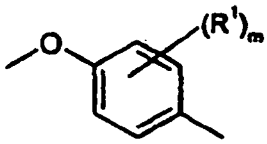 , 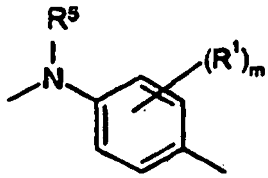

i signifie 1 et
$S^1$ représente $-NR^9-$

et les autres radicaux ont la signification indiquée dans la revendication 2.

**4.** Mémoire optique qui assure l'inscription optique, la sauvegarde permanente, la lecture optique, la réécriture optique et la protection contre la radiation ou l'écrasement d'informations dans la couche de mémoire, constituée par

I) une ou plusieurs couches de recouvrement amorphes, non diffusantes, transparentes, à faible biréfringence
II) une feuille composite selon l'une ou plusieurs des revendications 1 à 3
III) le cas échéant un support en matériau synthétique sous forme d'au moins une feuille en matériau synthétique ou d'un composite à feuilles en matériau synthétique ou d'un substrat en matériau synthétique.

**5.** Procédé pour la production d'une feuille composite selon les revendications 1 à 3,

A) le polymère photoadressable étant dissous dans un solvant,
B) la solution étant appliquée sur un substrat ou, selon le cas, sur la couche transparente formant une barrière ou, selon le cas, sur la couche de réflexion, si elle est présente,
C) le solvant étant évaporé et la feuille composite étant séchée.

**6.** Procédé pour la production d'une mémoire optique selon la revendication 4,

i) des couches de recouvrement transparentes étant appliquées sur la feuille composite produite selon la revendication 5, sur la face de la couche de stockage,
ii) le cas échéant, un support en matériau synthétique étant appliqué sur l'autre face (côté substrat) de la feuille composite.

**7.** Utilisation de la mémoire optique selon la revendication 4 comme carte mémoire, carte à puce, pièce d'identité, document, étiquette dotée de fonctions de mémoire, plaquette dotée de fonctions de mémoire.

**8.** Utilisation selon la revendication 7, **caractérisée en ce que** le document est une carte d'identification.

**9.** Procédé pour la production d'une feuille composite

A) un polymère organique photoadressable, qui présente des unités structurelles à base des composés de formule (II)

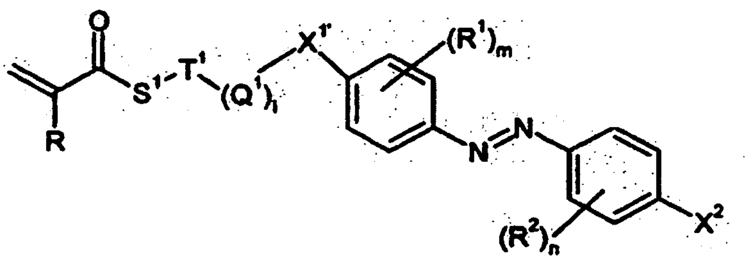 (II),

où

$R^1$ et $R^2$ représentent, indépendamment l'un de l'autre, hydrogène ou un substituant non ionique et

m et n valent, indépendamment l'un de l'autre, un nombre entier de 0 à 4, de préférence de 0 à 2,
$X^2$ signifie $X^{1'}$-$R^3$ ou, selon le cas, $X^{2'}$-$R^4$,
$X^{1'}$ et $X^{2'}$ représentent une liaison directe, -O-, -S-, -(N-$R^5$) -C($R^6R^7$)-, -(C=O)-, -(CO-O)-, -(CO-N$R^5$)-, -($SO_2$)-, -($SO_2$-O)-, -($SO_2$-N$R^5$)-, -(C=N$R^8$)-, -(CN$R^8$-N$R^5$) - ou -N=N-,
$R^3$ , $R^4$ , $R^5$ et $R^8$ indépendamment l'un de l'autre, représentent hydrogène, $C_1$-$C_{20}$-alkyle, $C_3$-$C_{10}$-cycloalkyle, $C_2$-$C_{20}$-alcényle, $C_6$-$C_{10}$-aryle, $C_1$-$C_{20}$-alkyl- (C=O) -, $C_3$-$C_{10}$-cycloalkyl- (C=O) -, $C_2$-$C_{20}$-alcényl-(C=O) -, $C_6$-$C_{10}$-aryl- (C=O) -, $C_1$-$C_{20}$-alkyl-($SO_2$)-, $C_3$-$C_{10}$-cycloalkyl-($SO_2$)-, $C_2$-$C_{20}$-alcényl-($SO_2$)- ou $C_6$-$C_{10}$-aryl-($SO_2$)-,
$R^6$ et $R^7$ indépendamment l'un de l'autre, représentent hydrogène, halogène, $C_1$-$C_{20}$-alkyle, $C_1$-$C_{20}$-alcoxy, $C_3$-$C_{10}$-cycloalkyle, $C_2$-$C_{20}$-alcényle ou $C_6$-$C_{10}$-aryle ou
$X^{1'}$-$R^3$ et $X^{2'}$-$R^4$ représentent hydrogène, halogène, cyano, nitro, $CF_3$ ou $CCl_3$,
R représente hydrogène ou méthyle et
$Q^1$ représente -O-, -S-, -(N-$R^5$)-, -C($R^6R^7$)-, -(C=O)-, -(CO-O)-, -(CO-N$R^5$)-, -($SO_2$)-, -($SO_2$-O)-, -($SO_2$-N$R^5$)-, -(C=N$R^8$)-, -(CN$R^8$-N$R^5$)-, -$(CH_2)_p$-, p- ou m-$C_6H_4$- ou un radical divalent présentant les structures suivantes

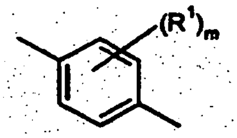
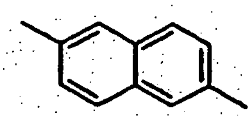
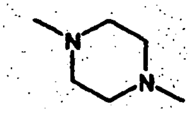
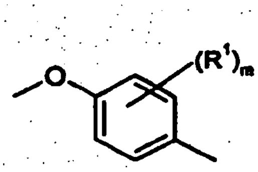
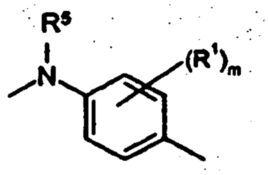

i représente un nombre entier de 0 à 4, les différents $Q^1$ pouvant avoir des significations différentes pour i > 1,
$T^1$ représente -$(CH_2)_p$-, la chaîne pouvant être interrompue par -O-, -N$R^9$-, ou -OSi$R^{10}{}_2$O-,
$S^1$ représente -N$R^9$-,
p représente un nombre entier de 2 à 12, de préférence de 2 à 8, en particulier de 2 à 4,
$R^9$ représente hydrogène, méthyle, éthyle ou propyle et
$R^{10}$ représente méthyle ou éthyle,

étant dissous dans du 2,2,3,3-tétrafluoropropanol,
B) la solution étant appliquée sur un substrat ou, selon le cas, si elle est présente, sur la couche transparente formant une barrière ou, selon le cas, sur la couche de réflexion,
C) le solvant étant évaporé et la feuille composite étant séchée.

**10.** Procédé pour la production d'une mémoire optique,

i) des couches de recouvrement transparentes étant appliquées sur la feuille composite produite selon la revendication 9, sur la face de la couche de stockage,
ii) le cas échéant, un support en matériau synthétique étant appliqué sur l'autre face (côté substrat) de la feuille composite.

**11.** Mémoire optique qui assure l'inscription optique, la sauvegarde permanente, la lecture optique, la réécriture optique et la protection contre la radiation ou l'écrasement d'informations dans la couche de mémoire, constituée par

I) une ou plusieurs couches de recouvrement amorphes, non diffusantes, transparentes, à faible biréfringence
II) une feuille composite produite selon la revendication 9
III) le cas échéant un support en matériau synthétique sous forme d'au moins une feuille en matériau synthétique ou d'un composite à feuilles en matériau synthétique ou d'un substrat en matériau synthétique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5173381 A
- JP 61162386 A
- DE 19914325 C1
- EP 0335032 A2
- WO 0161690 A1
- WO 2004086390 A1
- DE 10313173 A1
- US 6492468 B


### In der Beschreibung aufgeführte Nicht-Patentliteratur


- **B. VOLLMER.** Grundriss der Makromolekularen Chemie. Springer-Verlag, 406-410
- Chemistry & Technology of UV & EB Formulations For Coatings, Inks & Paints. SITA Technology, 1991, vol. 2, 31-235